(19) Europäisches Patentamt
European Patent Office
Office européen des brevets

(11) EP 2 144 195 B1

# (12) EUROPEAN PATENT SPECIFICATION

(45) Date of publication and mention of the grant of the patent:
**04.04.2018 Bulletin 2018/14**

(51) Int Cl.:
***G06Q 10/00*** *(2012.01)*

(21) Application number: **09164976.4**

(22) Date of filing: **09.07.2009**

## (54) Method for continuously estimating persistent and intermittent failure probabilities for production resources

Verfahren zur kontinuierlichen Einschätzung persistenter und intermittierende Ausfallwahrscheinlichkeiten für Produktionsressourcen

Procédé pour l'évaluation constante et intermittente des probabilités de défaillance pour les ressources de production

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.07.2008 US 79456 P**
**23.06.2009 US 489724**
**19.09.2008 US 98392 P**

(43) Date of publication of application:
**13.01.2010 Bulletin 2010/02**

(73) Proprietor: **Palo Alto Research Center Incorporated**
**Palo Alto, California 94304 (US)**

(72) Inventors:
- **Dekleer, Johan**
  **Los Altos, CA 94024 (US)**
- **Kuhn, Lukas**
  **Palo Alto, CA 94306 (US)**
- **Price, Robert R.**
  **Palo Alto, CA 94306 (US)**
- **Do, Minh Binh**
  **Mountain View, CA 94040 (US)**
- **Zhou, Rong**
  **Cupertino, CA 95014 (US)**
- **Liu, Juan**
  **Milpitas, CA 95035 (US)**
- **Schmidt, Tim**
  **Palo Alto, CA 94306 (US)**

(74) Representative: **Grünecker Patent- und Rechtsanwälte**
**PartG mbB**
**Leopoldstraße 4**
**80802 München (DE)**

(56) References cited:
**US-A1- 2008 062 211**

- **RUI ABREU ET AL: "An Evaluation of Similarity Coefficients for Software Fault Localization" DEPENDABLE COMPUTING, 2006. PRDC '06. 12TH PACIFIC RIM INTERNATIO NAL SYMPOSIUM ON, IEEE, PI, 1 December 2006 (2006-12-01), pages 39-46, XP031034202 ISBN: 978-0-7695-2724-6**
- **KLEER DE J ET AL: "DIAGNOSING MULTIPLE FAULTS" ARTIFICIAL INTELLIGENCE, ELSEVIER SCIENCE PUBLISHERS. AMSTERDAM, NL, vol. 32, no. 1, 1 April 1987 (1987-04-01), pages 97-130, XP000743181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 144 195 B1

## Description

The present exemplary embodiments relate to automated diagnosis of resources in production systems having multiple resources for achieving production goals. R. Abreu, P. Zoetweij and A.J.C. van Gemund, in a paper entitled "An evaluation of similarity coefficients for software fault localization", 12th Pacific Rim International Symposium on Dependable Computing (PRDV'06), IEEE, 2006, describe an automated diagnosis of software faults wherein software fault localization can be performed through the analysis of program spectra) by comparing spectra for runs in which an error has been detected to spectra for runs in which no error has been detected. Diagnosing system performance and component status can advantageously aid in improving productivity, identifying faulty or underperforming resources, scheduling repair or maintenance, etc. Accurate diagnostics requires information about true condition of components in production system. Such information can be obtained directly from sensors associated with individual components and/or may be inferred from limited number of sensor readings within production plant using model or other knowledge of system structure and dynamics. However, providing complete sensor coverage for all possible system faults can be expensive or impractical in harsh production environments. Thus, need remains for improved diagnostic techniques and systems by which probabilities of production resources being faulty can be ascertained without requiring complete sensor coverage. The invention is defined by a computer-implemented method of controlling operation of a production system according to the subject-matter of independent claim 1. The present disclosure provides production control systems and methods for estimating failure probabilities for single or multiple, persistent or intermittent faults in production system having multiple production resources. A self-diagnosing production control system is provided for controlling operation of production system to achieve one or more production goals and to diagnose failure status of resources in production system. The control system includes planner operatively coupled with production system to provide plans for execution in production system, plant model operatively coupled with planner and including model of plant of production system, and diagnosis engine with belief model and plant condition estimation component. The belief model includes current fault probability value for single or multiple, persistent or intermittent faults for each of resources in production system. The plant condition estimation component maintains count values for each production resource, including first count value $m_{11}$ indicating number of plans where resource m was used and failed, second count value $m_{10}$ indicating number of plans where resource m was used and succeeded, third count value $m_{01}$ indicating number of plans where resource m was not used and failed, and fourth count value $m_{00}$ indicating number of plans where resource m was not used and succeeded.

As each production plan is executed in production system, estimation component is provided with list of resources used in plan executed as well as an indication of whether plan succeeded or failed. Based on this, one of four count values is incremented, and current fault probability value is estimated for each resource based on corresponding count values for single persistent faults, multiple persistent faults, single intermittent faults, and/or multiple intermittent faults. The current fault probability values for resources are then stored for use by model-based planner that constructs and schedules production jobs or for other purposes, such as diagnosing failed system resources, maintenance scheduling, etc. The plant condition estimation component in certain implementations may also initialize probability values to predetermined value before execution of any plans in production system, and may multiply each count value by weighting factor less than 1 after estimating current fault probability value.

Fig. 1 is schematic diagram illustrating production system and an exemplary model-based production control system with planner, plant model, and diagnosis engine with belief model including current fault probability values for production resources and plant condition estimation component for estimating fault probabilities in accordance with one or more aspects of disclosure;
Fig. 2 is schematic diagram illustrating further details of an exemplary modular printing system plant in production system of Fig. 1;
Fig. 3 is schematic diagram illustrating further details of exemplary planner and diagnosis engine in production control system of Figs. 1 and 2;
Fig. 4 is schematic diagram illustrating plan space for production system, including production and diagnostic plans;
Fig. 5 is flow diagram illustrating construction of plans for execution in production system of Figs. 1 and 3;
Fig. 6 is flow diagram illustrating evaluation and generation of plans for execution in plant;
Fig. 7 is schematic diagram illustrating an exemplary state/action diagram showing possible plans for transitioning system state from starting state to goal state in production system of Figs. 1 and 3;
Fig. 8 is flow diagram illustrating an exemplary method of estimating failure probabilities for resources in production system in accordance with one or more aspects of present disclosure;
Fig. 9 is schematic illustration of number of possible production resource fault types in production system of Figs. 1 and 3;
Fig. 10 is schematic diagram illustrating four exemplary counter values maintained by plant condition estimation component in Figs. 1 and 3 for each production resource in production system in accordance with disclosure;

Fig. 11 is schematic diagram illustrating an exemplary observation function for single persistent fault in condition estimation component in Figs. 1 and 3;

Fig. 12 is schematic diagram illustrating simplified production system with six resources A-F and possible interaction paths;

Fig. 13 is table illustrating an exemplary set of posterior resource fault probability values for exemplary single persistent fault case in system of Fig. 12;

Fig. 14 is schematic diagram illustrating an exemplary observation function for single intermittent faults in condition estimation component in Figs. 1 and 3;

Figs. 15 and 16 are tables illustrating posterior resource fault probability values for exemplary single intermittent fault case in system of Fig. 12;

Fig. 17 is schematic diagram illustrating an exemplary observation function for multiple persistent faults in condition estimation component in Figs. 1 and 3;

Fig. 18 is schematic diagram illustrating an exemplary set of counter values maintained in diagnosis engine in accordance with present disclosure;

Figs. 19 and 20 are tables illustrating diagnosis and posterior resource fault probability values for exemplary multiple persistent fault case in system of Fig. 12;

Fig. 21 is schematic diagram illustrating an exemplary observation function for multiple intermittent faults in condition estimation component in Figs. 1 and 3; and

Fig. 22 is graph showing estimation of intermittency rates as function of number of trials.

The disclosure relates to automated diagnosis of resource fault conditions and estimation of resource fault probabilities in production systems generally and is hereinafter illustrated and described in context of exemplary document processing systems having various printing and document transport resources or modules. The disclosed concepts also find utility in association with product packaging systems and any or type or form of system in which plurality of resources, whether machines, humans, software or logic components, objects, etc., may be selectively employed according to plans comprised of series of actions to achieve one or more production goals. The disclosure finds particular utility in identifying production resources or operating modes thereof that are suspected of being faulty so as to facilitate construction and scheduling of plans in systems in which given production goal can be achieved in two or more different ways, including use of different resources, and/or operation of given system resource at different operating parameter values.

Figs. 1-3 illustrate an exemplary system 1, with production system 6 including producer component 10 that receives production jobs 49 from customer 4 and plant 20 having plurality of resources 21-24 that may be actuated or operated according to one or more plans 54 so as to produce one or more products 52 for provision to customer 4 by producer 10, where 'producing' products can include modifying products, objects, etc., including packaging or wrapping products, printing and transferring paper or other printable substrates, etc. Fig. 2 illustrates further details of one exemplary plant 20 and Fig. 3 shows additional details regarding exemplary model-based control system 2 with diagnosis engine 40 in accordance with present disclosure. The producer 10 manages one or more plants 20 which actually produce output products 52 to satisfy customer jobs 49. The producer 10 provides jobs and objectives 51 to multi-objective planner 30 of model-based control system 2 and production system 6 receives plans 54 from planner 30 for execution in plant 20. The jobs 54 can include one or both of production and diagnostic goals.

The control system 2 further includes plant model 50 providing model of components and operation of plant 20, and diagnosis engine 40. The diagnosis engine maintains belief model 42 including fault probabilities 45 for each of plant resources 21-24, as well as series of four counter values $m_{11}$, $m_{10}$, $m_{01}$, and $m_{00}$ for each of resources 21-24, and plant condition estimation/updating component 44 for updating belief model 42 and resource fault probability values 45 in accordance with various aspects of disclosure. The four count values for each individual resource include first count value $m_{11}$ indicating number of plans where resource m was used and failed, second count value $m_{10}$ indicating number of plans where resource m was used and succeeded, third count value $m_{01}$ indicating number of plans where resource m was not used and failed, and fourth count value $m_{00}$ indicating number of plans where resource m was not used and succeeded.

The diagnosis engine 40 determines and updates current plant condition 58 via plant condition estimation/updating component 44 based on one or more previously executed plans 54, corresponding observations 56 from plant 20, and model 50, and provides expected information gain dat70 to planner 30 for one or more possible plans 54 based on current plant condition 58 and model 50. For each plan 54 executed in production system 6, diagnosis engine 30 receives an indication of success or failure thereof, as well as an ordered listing of resources used in plan. Based on this, estimation component 44 increments appropriate one of count values $m_{11}$, $m_{10}$, $m_{01}$, and $m_{00}$ for each of resources (for unused and used resources) based on used resources list and success or failure of plan 54. Using one or more of count values $m_{11}$, $m_{10}$, $m_{01}$, and $m_{00}$, current fault probability value is estimated by estimation component 44 for each resource 21-24 for single or multiple, persistent or intermittent faults, and stores fault probability values for resources, for example, in memory integrated into or operatively coupled with diagnosis engine 40. The probability values are initialized to zero or some predetermined value (e.g., $10^{-10}$) prior to execution of any plans 54 in production system 6. Moreover, count values are multiplied by weighting factor λ after estimating current fault probability value in certain implementations, where A is less than 1 (e.g., λ = 0.99999 in one example).

The operator observations 56 from interface 8 may also be used to supplement estimation and updating of current plant condition including resource fault probabilities by component 44. The estimation component 44 provides condition information 58 to inform planner 30 of confirmed or suspected condition of one or more resources 21-24 or other components of plant 20, and planner 30 may utilize this information 58 in providing plans 54 for implementing given production job or goal 51, in consideration of production objectives 34and diagnostic objectives 34b. The diagnosis engine 40 also includes component 46 that provides expected information gain dat70 to planner 30 based on model 50 and belief model 42. The exemplary system 1 also includes an optional operator interface 8 (Fig. 1) coupled with diagnosis engine 40 to provide operator observations 56 to diagnosis engine 40, with diagnosis engine 40 determining current plant condition 58 based at least partially on operator observations 56in certain implementations. The operator interface 8 may also allow an operator to define diagnostic job 8b using diagnosis job description language 8a, and diagnosis engine 40 may provide diagnostic jobs 60 to producer 10. The diagnosis engine 40 in this implementation is operative to selectively provide one or more self-generated diagnostic jobs 60 and/or operator defined diagnostic jobs 8b to producer 10, which in turn provides jobs and objectives 51 to planner 30. The information gain data 70 may optionally be determined in consideration of operator defined diagnostic jobs 8b from operator interface 8.

The model-based control system 2 and components thereof may be implemented as hardware, software, firmware, programmable logic, or combinations thereof, and may be implemented in unitary or distributed fashion. In one possible implementation, planner 30, diagnosis engine 40, and model 50 are software components and may be implemented as set of sub-components or objects including computer executable instructions and computer readable data executing on one or more hardware platforms such as one or more computers including one or more processors, data stores, memory, etc. The components 30, 40, and 50 and sub components thereof may be executed on same computer or in distributed fashion in two or more processing components that are operatively coupled with one another to provide functionality and operation described herein. Likewise, producer 10 may be implemented in any suitable hardware, software, firmware, logic, or combinations thereof, in single system component or in distributed fashion in multiple interoperable components. In this regard, control system 2 may be implemented using modular software components (e.g., model 50, planner 30, diagnosis engine 40 and/or sub-components thereof) to facilitate ease of debugging and testing, ability to plug state of art modules into any role, and distribution of operation over multiple servers, computers, hardware components, etc.

Referring to Figs. 2 and 3, planner 30 provides one or more plans 54 to production system 6 for execution in plant 20 based on at least one output objective 34 (Fig. 3) and production goals as directed by incoming jobs 51 from producer 10. The planner 30 selectively factors in one or more output objectives 34 derived from jobs and objectives 51 in constructing plans 54 including production objectives 34and diagnostic objectives 34b. The production objectives 34are created and updated according to jobs and objectives 51 obtained from production system 6, and diagnostic objectives 34b are derived from, and updated according to, current plant condition 58 and expected information gain dat70 provided by diagnosis engine 40. The production objectives 34may relate to scheduling of orders for produced products 52 (Fig. 1), and may include prioritization of production, minimization of inventory, and other considerations and constraints driven in large part by cost and customer needs. Examples of production objectives 34include prioritizing plan construction/generation with respect to achieving given product output goal (simple production criteria) as well as secondary consideration such as simple time efficient production, cost efficient production, and robust production. For instance, cost efficient production objectives 34 will lead to construction/generation of plans 54 that are most cost efficient among plans that met production goal as dictated by jobs 51 received from producer 10. The diagnostic objectives 34b may include objectives related to determining preferred action sequences in generated plans 54 for performing given production-related task, minimization of maintenance and repair costs in operation of plant 20, identifying resources 21-24 causing intermittent or persistent faults, etc. The control system 2 may optionally include plan data store or database 36 used to store plans 54 selectable by planner 30 for execution in plant 20 to facilitate one or more production or diagnostic objectives 34. Alternatively or in combination, planner 30 can synthesize (e.g. construct or generate) one or more plans 54 as needed, using plant model 50 and information from producer 10 and diagnosis engine 40 to determine states and actions required to facilitate given production and/or diagnostic objectives 34.

The planner 30 creates and provides plans 54 for execution in plant 20. The plans 54 include series of actions to facilitate one or more production and/or diagnostic objectives 34 while achieving production goal according to jobs 51, and in which given action may appear more than once. The actions are taken with respect to states and resources 21-24 defined in model 50 of plant 20, for example, to route given substrate through modular printing system 20 from starting state to finished state as shown in Fig. 2. In operation, planner 30 generates or constructs plan 54 that will achieve given production goal at least partially based on diagnostic objective 34b and expected information gain dat70 from diagnosis engine 40. The planner 30 in illustrated embodiment includes goal-based plan construction component 32 that assesses current plant condition 58 from diagnosis engine 40 in generating plan 54 for execution in plant 20. The component 32 may also facilitate identification of faulty components 21-24 or sets thereof in constructing plans 54 based on observations 56 and current plant conditions 58 indicating one or more plant components 21-24 as being suspected of causing system faults.

Referring also to Fig. 4, planner 30 preferably constructs plans 54 within plan space 100 that includes both production plans 102 and diagnostic plans 104 to facilitate diagnostic information gain while implementing production. The union of plan sets 102 and 104 includes production plans 106 that have diagnostic value (e.g., can facilitate one or more diagnostic objectives 34b in Fig. 3), wherein planner 30 advantageously utilizes information from diagnosis engine 40 to preferentially construct plans 106 that achieve production goals while obtaining useful diagnostic information in accordance with diagnostic objectives 34b.

Fig. 2 illustrates further details of an exemplary modular printing system plant 20 in production system 6, including material supply component 21 that provides printable sheet substrates from one of two supply sources 21 and 21b, plurality of print or marking engines 22, an output finisher station 23, modular substrate transport system including plurality of multidirectional substrate transport/router components 24 (depicted in dashed circles in Fig. 2), one or more output sensors 26 disposed between transport system 24 and finisher 23, and controller 28 providing control signals for operating various actuator resources 21-24 of plant 20. The exemplary printing system plant 20 includes four print engines 22a, 22b, 22c, and 22d, although any number of such marking engines may be included, and further provides multi-path transport highway with three multidirectional substrate transport paths 25a, 25b, and 25c, with transport components 24 being operable by suitable routing signals from controller 28 to transport individual substrate sheets from supply 21 through one or more of marking engines 22 (with or without inversion for duplex two-side printing), and ultimately to output finishing station 23 where given print jobs are provided as output products 52. Each of printing engines 22, moreover, may individually provide for local duplex routing and media inversion, and may be single color or multi-color printing engines operable via signals from controller 28. The model-based control system 2 may, in certain embodiments, be integrated into plant controller 28.

In operation, planner 30 automatically generates plans 54, for example, by piece-wise determination of series of actions to form plan and/or by obtaining whole or partial plans 54 from data store 36 for component resources 21-24 of printing system plant 20 from description of output production goals derived from incoming jobs 51 in consideration of one or more production objectives 34and diagnostic objectives 34b. In particular, when plant 20 has flexibility in how output goals can be achieved (e.g. in how desired products 52 can be created, modified, packaged, wrapped, etc.), such as when two or more possible plans 54 can be used to produce desired products 52, diagnosis engine 40 can alter or influence plan construction operation of planner 30 to generate plan 54 that is expected to yield most informative observations 56. The additional information gained from execution of constructed job 54 can be used by producer 10 and/or by planner 30 and diagnosis engine 40 to work around faulty component resources 21-24, to schedule effective repair/maintenance, and/or to further diagnose system state (e.g., to confirm or rule out certain system resources 21-24 as source of faults previously detected by sensor(s) 26). In this manner, information gleaned from constructed plans 54 (e.g., plant observations 56) can be used by estimation and updating component 44 to further refine accuracy of current belief model 42.

Moreover, where plant 20 includes only limited sensing capabilities, (e.g., such as system in Fig. 2 having only sensors 26 at output of transport system 24 downstream of printing engines 22), passive diagnosis is unable to unambiguously identify every possible fault in system 20, whereas direct diagnostic efforts lead to system down-time and associated cost in terms of productivity. The control system 2 of present disclosure, on other hand, advantageously facilitates selective employment of intelligent on-line diagnosis aided by construction and execution of plans 54 that provide enhanced diagnostic information according to plant condition 58 and/or expected information gain 70, and may further advantageously facilitate generation of one or more dedicated diagnostic plans 54 for execution in plant 20 based on at least one diagnostic objective 34b and plant condition 58, and for intelligent interleaving of dedicated diagnostic plans 54 and production plans 54 based on production and diagnostic objectives 34 according to current plant condition 58. In particular, planner 30 can cause execution of explicit diagnostic plans 54 that involve halting production when information gained from plan 70 is expected to lead to significant future gains in productivity, enhanced ability to identify faulty resources 21-24, or other long term productivity objectives 34and/or diagnostic objectives 34b.

Even without utilizing dedicated diagnostic plans 54, moreover, control system 6 significantly expands range of diagnosis that can be done online through pervasive diagnostic aspects of this disclosure during production (e.g., above and beyond purely passive diagnostic capabilities of system), thereby lowering overall cost of diagnostic information by mitigating down time, number of service visits, and cost of unnecessarily replacing components 21-24 in system 20 that are actually working, without requiring complete sensor coverage. The planner 30 is further operative to use current plant condition 58 in making tradeoff between production objectives 34and diagnostic objectives 34b in generating plans 54 for execution in plant 20, and may also take condition 58 into account in performing diagnosis in isolating faulty resources 21-24 in plant 20.

The plant condition estimation and updating component 44 of diagnosis engine 40 infers condition of internal components 21-24 of plant 20 at least partially from information in form or observations 56 derived from limited sensors 26, wherein diagnosis engine 40 constructs plant condition 58 in one embodiment to indicate both condition (e.g., normal, worn, broken) and current operational state (e.g., on, off, occupied, empty, etc.) of individual resources 21-24 or components of plant 20. The belief model 42 can be updated accordingly to indicate confidence in conditions and/or states of resources or components 21-24. Once producer 10 has initiated production of one or more plans 54, diagnosis engine 40 receives copy of executed plan(s) 54 and corresponding observations 56 (along with any operator-entered observations 56a).

The condition estimation and updating component 44 uses observations 56,56a together with plan 54 and plant model 50 to infer or estimate condition 58 of internal components/resources 21-24 and updates belief model 42 accordingly. The inferred plant condition information 58 is used by planner 30 to directly improve productivity of system 20, such as by selectively constructing plans 54 that avoid using one or more resources/components 21-24 known (or believed with high probability) to be faulty, and/or producer 10 may utilize condition information 58 in scheduling jobs 51 to accomplish such avoidance of faulty resources 21-24. The exemplary diagnosis engine 40 also provides future prognostic information to update diagnostic objectives 34b which may be used by planner 30 to spread utilization load over multiple redundant components 21-24 to create even wear or to facilitate other long term objectives 34.

Fig. 5 illustrates diagram 200 showing construction of plans 54 for execution in production system 6 to achieve one or more production goals. Diagnostic objectives 34b are received at 202 and current plant condition 58 and expected information gain data 70 are determined at 204 based at least partially on previously executed plan 54 and at least one corresponding observation 56 from plant 20 using plant model 50. The planner 30 receives plant conditions 58 at 208 from diagnosis engine 40, and receives production jobs and objectives 51 at 210 from producer 10. At 212, planner 30 constructs plan 54 at based at least partially on diagnostic objective 34b and expected information gain data 70 and sends constructed plan 54 at 214 to plant 20 for execution. The diagnosis engine 40 receives plan 54 and plant observations 56 at 216, and updates plant condition 58 and expected information gain data 70 at 218, after which further jobs and objectives 51 are serviced and process 200 continues again at 210 as described above.

The planner 30 can employ any suitable technique for constructing plans 54 to enhance diagnostic information gain while achieving production goals, including using heuristic searches, SAT solvers, etc. Fig. 6 illustrates an exemplary method 300 for evaluating and constructing plans for execution in plant 20 using A* search. In this embodiment, estimation component 44 of diagnosis engine 40 (Fig. 3) establishes and updates beliefs in belief model 42, including fault probability values 45 for each production resource 21-25 and updates plant model 50. At 302, estimation component 44 derives failure or fault probabilities for each fault hypothesis in plant 20 and employs dynamic programming at 304 to generate an upper and lower plan failure probability bounding heuristic based on belief model 42 and current plant condition 58. At 306, planner 30 uses heuristic to evaluate partial plans 54 so as to construct maximally informative plans 54, preferably using an A* search approach. At 308, diagnosis engine 40 then uses constructed plan 54 and output observations 56 obtained from execution of constructed plan 54 in plant 20 to update belief model 42.

The diagnosis engine 40 advantageously provides inputs for searching by planner 30 in order to derive valuable information for diagnosis of system 20. The best plans 54 with respect to diagnostic value for single persistent faults are those that have an equal probability of succeeding or failing. The diagnosis engine 40 may advantageously use this notion to develop heuristics to guide search by planner 30 in evaluating partial plans 54 to construct plan 54 to be executed in plant 20. The control system 2 implements efficient on-line active or pervasive diagnosis in controlling plant 20 through combination of model-based probabilistic inferences in diagnosis engine 40 with decomposition of information gain associated with plan execution using an efficient heuristic target search in planner 30. The planner 30 operates to construct sequence of actions (plan 54) that transfers substrate sheets through system 20 to generate requested output for given print job (e.g. to satisfy production goal), using pervasive diagnosis to aid in plan construction. One particular production objective 34in this system 20 is to continue printing even if some of print engines 22 fail or some of paper handling modules 24 fail or jam. In this printing system example 20, moreover, there are only output type sensors 26 preceding finisher 23, and as result, plan 54 consisting of numerous actions must be executed before useful observation 56 can be made. Moreover, execution of actions of given plan 54 may result in only single observable plan outcome or observation *O* (e.g., observation 56 from sensor 26).

The system's beliefs in belief model 42 can be represented as probability distribution over hypothesis space $H_{sys}$, Pr(H), where belief model 42 is updated by diagnosis engine 40 from past observations 56 using Bayes' rule to get posterior distribution over unknown hypothesis H given observation 0 and plan P: $Pr(H|O, P) = \alpha\ Pr(O|H, P)\ Pr(H)$. Regarding plan selection/construction priorities in context of diagnostic information value, an informative plan 54 reduces uncertainty of system's beliefs 42, and thus plans 54 with outcomes that are hard to predict are most informative, while execution of plans 54 that are known to succeed (or known to fail) will yield no diagnostic information gain. Thus, exemplary planner 30 attempts to create informative plans to facilitate diagnostic information gain, although various fault estimation techniques of present disclosure can be employed regardless of plan selection criteria.

The exemplary planner 30 establishes heuristic by which sets or families of plans 54 are considered that share structure, such as by employing an A* target value search using set of partial plans $p_{I\rightarrow S_1}, p_{I\rightarrow S_2}, \ldots, p_{I\rightarrow S_n}$ which progress

from an initial state I to intermediate states $S_1,S_2,...,S_n$. In this approach, for each step, planner 30 uses A* target search to attempt to expand plan most likely to achieve production goal in best (e.g., most informative) way. An ideal plan p in this regard would start with prefix $p_{I \rightarrow S_n}$ which takes system 20 to state $S_n$ and continues with suffix plan $p_{S_n \rightarrow G}$ leading from state $S_n$ to goal state G. This A* technique chooses partial plan $p_{I \rightarrow S_n}$ to expand using heuristic function $f(S_n)$ provided by diagnosis engine 40 which estimates total path quality as quality of plan prefix $p_{I \rightarrow S_n}$ (written as $g(S_n)$), plus predicted quality of suffix $p_{S_n \rightarrow G}$, (written as $h(S_n)$). In illustrated embodiments, therefore, planner 30 employs heuristic function derived by diagnosis engine 40 based at least partially on description of system architecture and dynamics in plant model 50.

Fig. 7 shows an exemplary state/action diagram 400 depicting possible plans for transitioning system state from starting state S to goal state G in plant 20. In this example, system state nodes 402 include starting state S 402s, goal stage G 402g, and four intermediate states 402a-402d for nodes A-D, respectively. A given plan 54 for this example proceeds by following actions 404 through diagram 400 to ultimately reach goal G 402g. One possible plan 54 that satisfies such production goal moves system through state sequence [S, A, C, G] through actions 404sa, 404ac, and 404cg as shown in Fig. 7. Assuming for illustrative purposes that this plan 54 results in failure caused by faulty action 404ac between nodes A and C due to single persistent fault in one of system resources 21-24, diagnosis engine 40 would determine from plan 54 and resulting fault observation 56 that all of actions 404sa, 404ac, and 404cg along plan path are (without further information) suspected of being faulty. In this example, planner 30 will construct plan 54 [S, A, D, G] for execution in plant 20. The plan 54 may or may not succeed, and in either case something may be learned from diagnostic perspective. For instance, if plan [S, A, D, G] fails, diagnosis engine 40 learns that node $a_{S,A}$ was failed action (for assumed single persistent fault scenario), and if plan 54 is successful, diagnosis engine 40 can further refine belief model 42 by eliminating action 404s as fault suspect.

The planner 30 can also facilitate selective avoidance of known faulty resources 21-24 in plant 20 voice component 32b, as well as generation of plans 54 so as to help determine source of faults observed during production. For example, planner 30 operating above described modular printing system plant 20 of Fig. 2 can be influenced by diagnostic objectives 34b (Fig. 3) to preferentially construct paper paths via appropriate routing of substrates to use different subsets of routing and printing components 24 and 22, where given sequence of these paths can be used to isolate cause of an observed fault. Moreover, multiple plant pathways, redundancy of plant resources, and capability to operate resources at different speeds, directions, voltage levels, temperatures, or other flexibility in setting operational parameters of plant resources allows planner 30 to tailor active production plan generation for intelligent diagnostic information gain despite lack of complete sensor coverage in given plant 20. In this manner, modularity and flexibility of given system 20 can be exploited by pervasive diagnostic features of control system 2 to facilitate diagnostic objectives 34b while also providing benefits with regard to flexibility in achieving production goals.

In this implementation, planner 30 may receive production print job 51 from job queue (in producer 10, or queue in planner 30), and one or more plans 54 are constructed as described above to implement job 51. The observations 56 are provided to diagnosis engine 40 upon execution of plan(s) 54 to indicate whether plan 54 succeeded or failed (e.g., bent corners and/or wrinkles detected by sensors 26 in printed substrates). The diagnosis engine 30 updates hypothesis probabilities of belief model 42 based on executed plan 54 and observations 56. When fault occurs, planner 30 constructs most informative plan 54 in subsequent scheduling so as to satisfy diagnostic objectives 34b.

In addition to addressing single persistent faults in production resources 21-24, diagnosis engine 40 may also derive fault probabilities for intermittent faults, and multiple fault situations based on counter values 43 ($m_{11}$, $m_{10}$, $m_{01}$, and $m_{00}$) maintained in belief model 42. In this regard, isolating intermittent faults can be difficult, particularly if fault occurs infrequently. For instance, print engine that prints one blank page out of 1000 or computer that spontaneously reboots once per day is unacceptable, but faulty component can be difficult to identify. Accurate assessment of intermittent failure probabilities is valuable in diagnosing and repairing equipment, and presently disclosed techniques and systems provide framework for estimating both persistent and intermittent resource failure probabilities, and for continuously updating estimates while plant continues to operate. The exemplary system of Figs. 1-3 constitutes continuously running manufacturing line which changes paper from one state (e.g., blank) to another state (marked on, stapled, bound, etc.), in which limited sensor capabilities (e.g., sensors 26 in Fig. 2) provide fairly constant stream of observations 56 to diagnosis engine 40, including indications of substrates that encountered faulty resource 21-24 in plant 20. The diagnosis engine 40 employs estimation component 44 and counter values 43 to estimate probabilities of module failures from this data stream in conjunction with listings of plan states through which substrates traveled in executing given plan 54.

The planner 30 in this example constructs plan for each substrate, where individual substrate itineraries constitute plans 54, and multiple plans 54 can be concatenated to implement multi-substrate print jobs. The individual plans 54 thus specify full trajectory each substrate traverses through plant 20, which can be represented as an ordered list of resources 21-24, including specification of actions and operational states of resources (e.g., whether transport mechanism is operated in forward or reverse direction, etc.). The plans 54 in large systems can include large number of resource modules 21-24, and given plan may call for substrate to traverse given resource more that once. Failure may be detected in two ways. For instance, substrate may arrive at resource while it is still handling previous substrate, which access fault can be detected by module sensors and module will immediately stop moving substrates (manifested as "jam"). Second, system senses output of print engine matrix (e.g., via sensors 26 in Fig. 2) and can thus detect if substrate has been damaged in any way. Such substrate defects can include dog ear at one of corners, scuff marks on paper caused by rollers (called nips) gripping paper too tightly, leading edge damage to substrate (e.g., caused by substrate encountering protrusion as it moves through system 20, and/or substrate being crumpled or shredded inside machine 20). In contrast to digital circuit systems (where signal levels map to substrates), therefore, this type of production system has certain characteristics, including inability to mask or cancel errors, no ability for system to repair damaged substrate, and fact that given substrate may be touched by same module resource more than once.

A plan 54 or itinerary and its outcome can be represented as sequence of resource modules touched by substrate followed by Fail or Success. For example, in simplified system 530 of Fig. 12, plan 54 in which substrate sequentially passes through modules A,B,C,D,E,B,C and moves to output tray without damage is represented as (A,B,C,D,E,B,C,Success). Using same convention, plan 54 in which substrate passes through modules A and B and then jams in C is represented as (A,B,C,Fail). The present disclosure provides solutions for all combinations of multiple and persistent faults.

Fig. 8 illustrates an exemplary method 700 for estimating failure probabilities for production system resources in accordance with various aspects of present disclosure production system.

The method 700 includes maintaining set of four count values at 702 (e.g., values 43 in system of Figs. 1 and 3 above) for each of plurality of resources in production system. The count values for each individual resource m include first count value $m_{11}$ indicating number of plans where the resource m was used and failed, second count value $m_{10}$ indicating number of plans where resource m was used and succeeded, third count value $m_{01}$ indicating number of plans where resource m was not used and failed, and fourth count value $m_{00}$ indicating number of plans where resource m was not used and succeeded. At 704, an ordered list of resources and corresponding success/failure status are received, and sets of counters $m_{11}$, $m_{10}$, $m_{01}$, or $m_{00}$ are updated at 706 according to list and status (e.g., based on executed plant 54 and resulting plant observations 56). For each plan 54 executed in production system 6, select one of count values 43 is incremented for each of resources (used and unused) based on list of resources used in plan and success or failure of plan. For each resource, current fault probability value is estimated at 708 for single or multiple, persistent or intermittent faults based on at least one of corresponding set of count values 43, and current probability values 43 are stored.

Fig. 9 illustrates diagram 500 showing various possibilities, including single persistent fault, single intermittent fault, multiple persistent faults and multiple intermittent faults, and diagram 510 in Fig. 10 shows characteristics of individual counter values 43 for each resource. The probability estimation (at 708 in Fig. 8) in diagnosis engine 40 applies various assumptions with respect to reprographic resources in system of Fig. 2. A first premise is that every faulty module output is observable (catastrophic fault assumption), and another is that any damage to substrate cannot be rectified by later resources 21-24 of system 6. In addition, fault probabilities are assumed to be stationary, as opposed to drifting probabilities, and it is assumed that faulty resources produce bad outputs. Furthermore, substrate is assumed to be incapable of damaging module resource, and it is further assumed that observations themselves do not affect machine behavior. Moreover, all faults are assumed to be distinguishable (indistinguishable faults may be collapsed). The process 700 in Fig. 8 requires only sequence of plan-outcome pairs as input information.

Single Persistent Fault

For case of single persistent fault, $p_t(M)$ is probability module is faulted, and sequential Bayesian filter is given by following equation (1):

$$p_t(M|O,U) = \alpha p(O|M,U)p_{t-1}(M)\Big|, \quad (1)$$

where is chosen so that posterior probabilities sum to 1 (presuming we start with knowledge there is fault). Defining usage U to be whether module was used in plan that produced observation, p(O|M,U) is 1 in situations where $m_{00}$ or $m_{11}$ are incremented, and otherwise it is zero. Thus, if given resource module is not used in failing plan, it is exonerated as not being source of assumed single persistent fault. The resource is also exonerated if it was used in successful plan, since it is assumed that every fault is observable. Using updated counter values, therefore, fault probability estimation (single persistent fault case) at 708 (Fig. 8) involves exonerating resource by setting current fault probability to zero if second or third count values $m_{10}$ or $m_{01}$ are greater than zero. This result is illustrated and posterior probability diagram 520 in Fig. 11. Otherwise, current fault probability is set to 1/X, where X is number of resources where both second and third count values $m_{10}$ and $m_{01}$ are zero.

Fig. 12 shows an exemplary set of modules A-F and exemplary interaction paths there between, which are representative of resource modules in printing system 20 of Fig. 2 above. In one example, at an initial time t=0, all modules fail with prior probability that is initialized before execution of any plans 54 to $p_0 = 10^{-10}$. An exemplary sequence

of three plans 54 are then executed with corresponding results as follows: (A,B,C,D,E,F,Fail), (A,B,C,Success), (E,F,Success). After counter values are initialized (first datrow for t = 0 in result table 540 of Fig. 13) and initial (A,B,C,D,E,F,Fail) plan is executed, it is assumed that one of six resources is faulted at t = 1. As shown in second data row in Fig. 13, each resource at t = 1 must be suspected of being faulted with probability value of 1/6. For assumed single persistent fault case with above assumptions, successful plan exonerates all resources used in plan 54. Consequently, subsequent execution of plan (A,B,C,Success) indicates that modules A, B, and C are all working correctly, with their corresponding $m_{10}$ counter values are non-zero (incremented at t = 2) and these are exonerated (probability value zeroed at t = 2 in Fig. 13). Thereafter at t = 3, execution of plan (E,F,Success) exonerates modules E and F as their $m_{10}$ counter values are incremented. At this point, resource D is determined to be faulted with probability 1 as shown in Fig. 13.

Single Intermittent Fault

In case of single intermittent fault, fault probability value estimation at 708 in Fig. 8 includes exonerating resource (setting current fault probability to zero) if third count value $m_{01}$ is greater than zero, and setting current fault probability according to equation $\alpha w p_0(M)$, where $\alpha$ is value selected so that posterior fault probabilities for all resources sum to 1, where w is determined according to following equation:

$$w = [\frac{m_{10}}{m_{11}+m_{10}}]^{m_{10}}[\frac{m_{11}}{m_{11}+m_{10}}]^{m_{11}}.,$$

and
where $p_0(M)$ is prior resource fault probability value. In this single intermittent fault case, resource fault probability value p(O|M, U) is 0 if counter value $m_{01}$ is incremented (resource not used, plan fails) and 1 if $m_{11}$ is incremented (resource used in failed plan).

For other possibilities ($m_{10}$ or $m_{00}$ incremented), resource fault probability value p(O|M, U) is estimated using count values 43. In this regard, probability that resource produces an incorrect output if faulted is calculated as $m_{11}/(m_{11} + m_{10})$, where denominator can never be zero. The previous fault probability estimate for module m is $p_0(M)$, and given particular observation O, Bayes rule gives: $p_1(M|O, U) = \alpha p(O|M, U)p_0(M)$, where U represents whether module was used in executed plan 54. The observation function P(O|M, U) is estimated from counts $m_{ij}$. If observation was failure and m was used in plan ($m_{11}$ incremented), then $p(Fail|M = m, U) = m_{11}/(m_{11} + m_{10})$. If instead plan succeeded and resource was used ($m_{10}$ incremented), then $p(Success|M = m,U) = m_{10}/(m_{11} + m_{10})$. Otherwise (if resource module m was not used), m cannot affect observation O, and if result was success (good), p(Success|M = m,U) = 1, or if result was fault (bad), then p(Fail|M = m, U)=0, per single fault assumption. The resulting observation function results are shown in diagram 550 in Fig. 14.

Iterating Bayes rule leads to $p_t(M|O) = \alpha p(good)^g p(bad)^b p_0(M)$, where there are g observations of m-used good behavior and b observations of m-used bad behavior, which can be formalized in following equations (2) and (3):

$$p_t(M|\mathbf{O},\mathbf{U}) = \begin{cases} 0 & \text{if } m_{01} > 0 \\ \alpha w p_0(M) & \text{otherwise} \end{cases} \quad (2)$$

where

$$w = [\frac{m_{10}}{m_{11}+m_{10}}]^{m_{10}}[\frac{m_{11}}{m_{11}+m_{10}}]^{m_{11}}. \quad (3)$$

Referring also to table 560 in Fig. 15 and system resource modules A-F in Fig. 12, following illustrates operation of estimation component 44 in single intermittent fault case with following plans 54 being executed sequentially: (A,B,C,D,E,F,Fail), (A,B,C,Success), (E,F,Success). As shown in Fig. 15 (t = 0), probability values for resources A-F are initialized to $10^{-10}$ prior to executing first plan 54. With execution of first plan and resulting observation at t = 1 (A,B,C,D,E,F,Fail), each $m_{11}$ counter is incremented to 1 since all resources A-F were used and plan failed (other counters $m_{10}$, $m_{01}$, and $m_{00}$ are all zero). As result, w values for each resource are 1 in equation (3) above. Thereafter second plan (A,B,C) is executed and success observation is received at t = 2. The counters ($m_{00}$, $m_{01}$, $m_{10}$, $m_{11}$) for

resources A-C are all 0, 0, 1, 1 at this point since these were used in successful plan, whereas and counters for resources D-F are all 1, 0, 0, and 1. Based on above equation (3), w = 1/4 for resources A-C and w = 1 for remaining resources D-F at T = 2. Subsequent execution of successful third plan at t = 3 using resources E and F and observation (E,F,Success) results in count values for resources A-C all being 1, 0, 1, and 1, count values for D are 2, 0, 0, 1, and count values for resources E and F are 1, 0, 1, and 1, yielding resulting fault probability values in row t = 3 in table 560 of Fig. 15. In this example, job/observation (A,B,C,D,E,F,Success) repeats for seven more iterations, with table 560 showing resulting resource fault probability values for t = 4 and t = 10 based on corresponding selective counter value incrementing and computation per above equation (3).

Referring also to Fig. 16, another exemplary scenario is described to further illustrate operation of diagnosis engine 30 in case of single intermittent fault. In this case, it is assumed that prior probabilities of intermittent failures are initially equal for all module resources A-F in Fig. 12. Table 570 in fig. 16 illustrates resource fault probability values computed using above described technique at various times t = 2001, 4002, 6003, 8004, and 16,008, respectively, for scenario in which resource module D is intermittently faulted and damages one out of every 1001 substrates (starting with substrate 1001). In this example, moreover, printing system repeatedly executes plans: (A,B,E,F), (C,B,E,D), (A,B,C), and (F,E,D) sequentially. After 2000 plans, counts for resources A, F, C, and D are $m_{10}$ = 1000; $m_{11}$ = 0 and counts for resource modules B and E are $m_{10}$ = 1500; $m_{11}$ = 0. If module resource D damages substrate during plan (C,B,E,D), for single intermittent fault assumption, resources A and F are exonerated and their posterior fault probability value is set to 0, since third count value $m_{01}$ for these resources is now non-zero (these were not used in plan that failed).

At this point (t = 2001 in Fig. 16), w values from equation (3) above for resources B and E are given by following equation (4):

$$\left[\frac{1500}{1501}\right]^{1500}\frac{1}{1501} = .000245. \qquad (4)$$

The w term is higher for resources C and D as there have been fewer samples of good behavior observed, as in the following equation (5):

$$\left[\frac{1000}{1001}\right]^{1000}\frac{1}{1001} = .000368. \qquad (5)$$

After normalizing, posterior resource fault probability for modules B and E are: 0.2 and fault probability values for resources C and D are: 0.3, as shown in Fig. 16. Continuing in this example, no plan failures are observed for next 2000 plan executions, after which resource D then damages substrate in plan (D,E,F) at t = 4002. By single fault assumption, resources B and C are now exonerated and fault probability values therefore are zero as shown in Fig. 16 (these resources were not used in plan that failed, and thus their third count values $m_{01}$ are now non-zero). At this point, moreover, w values from equation (3) above are now given by following equations (6) and (7) for resource modules D and E, respectively:

$$\left[\frac{2000}{2002}\right]^{2000}\left[\frac{2}{2002}\right]^{2} = 1.352 \times 10^{-7}. \qquad (6)$$

$$\left[\frac{3000}{3002}\right]^{3000}\left[\frac{2}{3002}\right]^{2} = .601 \times 10^{-7}. \qquad (7)$$

After normalizing, corresponding fault probability values for D and E are p(D|O) = 0.7, and p(E|O) = 0.3, respectively, as shown in table 570 of Fig. 16 for t = 4002. After further operation of system in sequentially executing plans (A,B,E,F), (C,B,E,D), (A,B,C), and (F,E,D), resulting posterior probabilities p(M = m|O,U) are shown in Fig. 16 for other exemplary iterations t = 6003, 8004, and 16,008, illustrating how described technique continuously updates and refines fault probability estimates 45 of belief model 42, where it is seen that most likely suspect is resource D in this example. As seen in this illustration, assumption of single faults allows selective exoneration of modules that are not used in failed plans. All modules not exonerated will have same $m_{11}$ count value, moreover, because under single fault assumption, only modules that been used in every failing run remain suspect. In this example, therefore, $m_{11}$ = 1 in equations 4 and 5, and after more observations, $m_{11}$ = 2 in equations 6 and 7.

It is noted that $m_{11}$ and $m_{10}$ appear in denominators in above equation (3). One possible approach to avoid divide-by-zero error in equation (3) is Laplace adjustment to make all initial counts 1, which is equivalent to assuming uniform prior fault probability for all module resources. Another approach is to observe that equation 3 need never be evaluated until an observation is made, and to therefore include current observation in count values prior to computing equation (3).

In another aspect of present disclosure involves multiplying each count value $m_{11}$, $m_{10}$, $m_{01}$, and $m_{00}$ by weighting factor A after estimating current fault probability value, where weighting factor is less than 1 (e.g., 0.99999 in one example). This addresses situation in which module has operated perfectly for very large count values before faulting. In this case, if no weighting factor is used, it may take very long time (e.g., many failing samples) before faulty resource's posterior fault probability value rises sufficiently to be treated as leading candidate in failure diagnosis. The preferred approach is to apply small exponential weighting factor A at every increment such that counts 100,000 in past will have only half weight of new samples (e.g., $\lambda = 0.99999$).

Multiple Persistent Faults

Referring now to Figs. 17 and 18, in case of multiple persistent faults, diagnosis d is used to assign 'good' or 'faulted' to every member system module resource. In this case, plurality of unique diagnoses d are evaluated, at least one of which including single one of resources m, and at least one of diagnoses including at least two of resources m, where each diagnosis has unique assignment of either good or faulted to each member resource m. For each diagnosis d, diagnosis engine 40 maintains set of four diagnosis count values $d_{00}$, $d_{01}$, $d_{10}$, and $d_{11}$. As plans 54 are executed and corresponding observations 56 are obtained from plant 20, estimation component 44 selectively exonerates resources of given diagnosis by setting current fault probability for that diagnosis to zero if second or third diagnosis count values $d_{10}$ or $d_{01}$ are greater than zero, and otherwise setting current diagnosis fault probability to 1/X, where X is number of diagnoses where both second and third diagnosis count values $d_{10}$ and $d_{01}$ are zero. Based on this, estimation component 44 sets current fault probability for evaluated resources m according equation (8) below.

The number of possible diagnoses will be exponential as function of number of modules. In practice, diagnosis engine 30 can be configured to only consider subset of more probable diagnoses. Each tentative diagnosis d has associated counter values: $d_{00}$, $d_{01}$, $d_{10}$, and $d_{11}$. A set of count values is provided, as shown in Fig. 17, with four for each evaluated diagnosis, where number of counters is an exponential function of maximum number of module faults to be considered. The diagnosis count values include first diagnosis count value $d_{11}$ indicating number of failed plans where bad resource of diagnosis d was used, second diagnosis count value $d_{10}$ indicating number of successful plans where bad resource of diagnosis d was used, third diagnosis count value $d_{01}$ indicating number of failed plans where good resource of diagnosis d was not used, and fourth diagnosis count value $d_{00}$ indicating number of successful plans where good resource of diagnosis d was not used. A set of four counters $m_{00}$, $m_{01}$, $m_{10}$, and $m_{11}$ 43a1-43aX is provided as shown in Fig. 17 for each of X individual resources m being evaluated in engine 40 for single fault cases above, and exemplary diagnostic count values 43b are provided for Y evaluated diagnoses for estimating multiple fault probability values 45.

The diagnosis count values 43b are incremented as follows for every diagnosis d. The diagnoses in exemplary case will include diagnosis for each of resource modules m being considered, and additional diagnoses for each group of multiple resources to be considered. As with single fault cases discussed above, not all resources need to be evaluated with respect to fault probabilities, and similarly, not all possible diagnoses (combinations of evaluated resources) need to be considered in estimation of fault probabilities. In illustrated implementations for multiple faults, plurality of unique diagnoses d are established by engine 40 for evaluation, in which at least one of diagnoses includes single one of resources m, at least one of diagnoses includes at least two of resources m, and one diagnosis represents case of no faults.

In failed plan involving bad module of d, count value $d_{11}$ is incremented, and $d_{10}$ is incremented if successful plan involved bad module of d. The probabilities p(good|d) and p(bad|d) can now be computed directly in same way as single intermittent fault case. Similar to single persistent fault case discussed above, in general case, fault probability is determined as $p_t(D|O,U) = \alpha p(O|D,U)p_{t-1}(D)$, where $\alpha$ is selected so that posterior fault probabilities for all diagnoses sum to 1. In determining prior probability of diagnosis p0(D) modules are assumed to fail independently as per following equation (8):

$$p_0(D) = \prod_{g \in good(D)} p_0(g) \prod_{b \in bad(D)} (1 - p_0(b)). \quad (8)$$

Accordingly, if all resource modules used in plan 54 are subset of good modules of diagnosis d, then p(Fail|D = d,U) = 0 and p(Success|D = d,U) = 1. In every remaining case (i.e., if any of used modules are bad in d), then p(Success|D = d,U) = 0 and p(Fai|D = d,U) = 1. For multiple persistent fault case, probability estimation at 708 in Fig. 8 above involves exonerating resources of diagnosis by setting current fault probability for that diagnosis to zero if second or third diagnosis count values $d_{10}$ or $d_{01}$ are greater than zero, and otherwise, setting diagnosis fault probability to 1/X, where X is number of diagnoses where both second and third diagnosis count values $d_{10}$ and $d_{01}$ are zero. Fig. 18 illustrates observation function in multiple persistent fault case for an observation o of plan U. The posterior probability that particular module is faulted is simply sum of probabilities of diagnoses in which it appears:

$$p(m|o_1,\ldots,o_t) = \sum_{d\ s.t.\ m\in d} p(d|o_1,\ldots,o_t).$$

Where m is resource, $o_1$,...$o_t$ is set of observations, and d ranges over remaining set of suspect candidates S (for which third count value $d_{01}$ is zero).

Multiple Intermittent Faults

The estimation component 44 is adapted to estimate failure probabilities using one or more approaches as described hereinafter. The component 44 is further operative to estimate failure intermittency rate, alone or in combination with fault probability estimation. A first probability estimation approach employs counter values 43, and is efficient in terms of both CPU time and memory, whereas second approach is believed to provide improved accuracy, although more computationally intensive.

The counter technique for multiple intermittent fault case involves replacement of every occurrence of single module fault with candidate diagnosis d, and use of above described count values 43 for diagnoses. Application of Bayes rule yields fault probability: $p_t(D|O,U) = \alpha p(O|D,U)p_{t-1}(D)$ as in above multiple persistent fault case. Each tentative diagnosis d has associated counter values 43b $d_{00}$, $d_{01}$, $d_{10}$, and $d_{11}$ as shown in Fig. 17 and described above, where number of counters 43b for full coverage is an exponential function of maximum number of module faults to be considered. As in multiple persistent fault case described above, individual diagnoses d are unique, at least one of which including single one of resources m, and at least one of diagnoses d including two or more of resources m, with each diagnosis d having unique assignment of either good or faulted to each member resource m.

In operation, diagnostic engine increments diagnosis counters 43b in selective fashion as plans 54 are executed in plant 20 and corresponding observations 56 are received for considered diagnoses d. When received observation 56 indicates that plan 54 has failed involving bad module m of d, count value $d_{11}$ is incremented, and otherwise $d_{10}$ is incremented. Using counter values 43, estimation component 44 computes p(good|d) and p(bad|d) directly in same way as single intermittent fault case above. In system of Fig. 12, for consideration of both single and double faults, for example, there are 22 possible diagnoses, including one for no faults, 6 possible single faults, and 15 double faults. To illustrate, first executed plan 54 and observation 56 are (A,B,C,D,E,F,Fail). At this point, $d_{11}$ = 1 for all remaining 21 diagnoses ('no faults' diagnosis failed). In this illustrative example, next executed plan 54 and observation 56 are (A,B,C,Success). The diagnosis engine 40 increments $d_{10}$ for following 15 diagnoses: A, B, C, AB, AC, AD, AE, AF, BC, BD, BE, BF, CD, CE, and CF. Table 590 in Fig. 19 lists count values $d_{11}$ and $d_{10}$ after further plan/observations (E,F,Success), (A,B,C,D,E,F,Success) and (A,B,C,D,E,F,Success). Table 600 in Fig. 19 lists corresponding posterior diagnosis probabilities for suspect diagnoses, and estimation component 44 estimates posterior probability of any particular component resource m according to above noted formul $p(m|o_1,\ldots,o_t) = \sum_{d\ s.t.\ m\in d} p(d|o_1,\ldots,o_t).$ where d ranges over remaining set of suspect candidates S (those for which $d_{01}$ = 0). If plan/observation (A,B,C,fail) is followed by (D,E,F,fail), in single fault case, this would produce an error. As before, consider candidate diagnoses of size 2 or smaller. In multiple intermittent fault case, however, p = 0.11 for all diagnoses. The individual component failure probabilities are all: p = 0.33. The probabilities sum to 2 because system contains 2 faults.

In second approach for multiple intermittent faults, application of Bayes rule yields: $p_t(D|O,U) = \alpha p(O|D,U)p_{t-1}(D)$. Assuming $p_b(m)$ is given as probability that module m produces an incorrect output when faulted, $P_tD|O,U$ is given by:

$$p_t(D|O,U) = \begin{cases} 1 - \prod_{m\in bad(D)\cap U}(1-p_b(m)) & \text{If Fail} \\ \prod_{m\in bad(D)\cap U}(1-p_b(m)) & \text{If Success} \end{cases}$$

The estimation component 44 determines posterior probabilities of diagnoses by repeated application of Bayes rule resulting in:

$$p_t(D|O,\mathbf{U}) = \begin{cases} \prod_{U \text{ fails}}[1 - \prod_{m \in bad(D) \cap U}(1 - p_b(m))] \\ \prod_{U \text{ succeeds}} \prod_{m \in bad(D) \cap U}(1 - p_b(m)) \end{cases}$$

The second term (i.e., success) is computed by maintaining counter (as in single fault case) $m_{10}$ for each resource as follows:

$$\prod_{U \text{ succeeds}} \prod_{m \in bad(d) \cap U} (1 - p_b(m)) = (1 - p_b(m))^{m_{10}}.$$

To compute first term, single counter $i_{11}$ (counters $i_{11}$, 43c in Fig. 17) is associated with each set of modules m utilized in failing plan i (54), where I is set of all such sets which have failed at least once. The first term is then computed as:

$$\prod_{U \text{ fails}}[1 - \prod_{m \in bad(D) \cap U}(1 - p_b(m))] = \prod_{i \in I}[1 - \prod_{m \in bad(D) \cap i}(1 - p_b(m))]^{i_{11}},$$

where diagnosis engine 40 need not store module sets of successful plans 54. This second approach to estimating multiple intermittent fault probabilities is believed to provide better accuracy as tradeoff for increased computational intensity.

Learning Intermittency Rates

As noted above, each resource m of plant 20 can be good or faulted, and thus none, some, or all of K modules m can conceivably cause fault and thus adversely affect produced product(s) 52 of plant 20 with an unknown probability $q_k$, where $q_k = 0$ for good module and $q_k > 0$ for faulty module m. The estimation component 44 of diagnosis system 40 in certain embodiments is operative to estimate $\{q_k; k = 1, 2,...K\}$ from observations 56 received from plant 20. This single quantity $q_k$ combines probability of outputting correct value when faulted (*pb*(*m*) above) and probability of being faulted (*p*(*m*) above), and thus represents probability that module k outputs faulty value. In following discussion, given plan 54 w, output is 0 (undamaged) with probability:

$$g_w = \prod_{k \in w}(1 - q_k).$$

where g is 'good', and this probability is determined by plan 54 w. An output in this example is deemed to be good when all modules m involved behave correctly, hence probability gw takes product form. The output is 1 (damaged) with probability determined as follows:

$$b_w = 1 - g_w = 1 - \prod_{k \in w}(1 - q_k).$$

For sequence of observations 56, observation likelihood is $p(o_1, o_2, ..., o_T) = \Pi_t p(o_t)$|. The observations 56 can be grouped based on associated plan 54, e.g., group $w_1$ where all observations from execution of plan 54 $w_1$. The observation likelihood is determined as:

$$p(o_1, o_2, \ldots, o_T) = \prod_{w_i} \left[ g_{w_i}^{count_of_good} \cdot b_{w_i}^{count_of_bad} \right],$$

or equivalently:

$$\ln p(o_1, o_2, \ldots, o_T) = \sum_{w_i} \left[ c_{g_{w_i}} \ln g_{w_i} + c_{b_{w_i}} \ln(1 - g_{w_i}) \right],$$

Using cgwi and cbwi to denote counts of good and bad outputs when plan $w_i$ is used, respectively, estimation component 44 determines optimal $\{q_k, k = 1, 2, \ldots K\}$ that maximizes above observation likelihood by computing gradient as follows:

$$\begin{aligned} \frac{\partial \ln p(o)}{\partial q_k} &= \sum_{w_i} \left[ \left( \frac{c_{g_{w_i}}}{g_{w_i}} - \frac{c_{b_{w_i}}}{1 - g_{w_i}} \right) \cdot \frac{\partial g_{w_i}}{\partial q_k} \right] \\ &= \sum_{w_i} \left[ \left( \frac{c_{g_{w_i}}}{g_{w_i}} - \frac{c_{b_{w_i}}}{1 - g_{w_i}} \right) \cdot (-1) \prod_{j \in w_i, j \neq k} (1 - q_j) \right] \end{aligned}$$

Here cgwi and cbwi are determined from counter values 43 above, and any gradient descent type of determination may be used to search for optimal value of $q_k$, where cost surface is polynomial of *gwi*, and *gwi* is polynomial of $q_k$'s.

As simpler approximation for any given plan 54 *w*, estimation component 44 can compute corresponding empirical success rate as:

$$\hat{g}_w = \frac{c_{g_w}}{c_{g_w} + c_{b_w}}.$$

When total count *cgw* + *cbw* are large enough, empirical success rate will converge to true value *gw*. Furthermore, we can consider $\hat{g}_w$| as an average over set of *Nw* independent and identically distributed variables, i.e., $\hat{g}_w = \frac{\sum_t x_t}{N_w}$, where $x_t$ is binary random variable taking value 1 with probability *gw* and 0 with probability 1-*gw*. From Law of Large Numbers, average converges to Gaussian distribution as Nw increases, and Gaussian distribution has mean and variance as follows:

$$\begin{aligned} \mu &= \frac{1}{N_w} \sum_t E(x_t) = g_w \\ \sigma^2 &= \frac{1}{N_w^2} \sum_t var(x_t) = \frac{g_w(1 - g_w)}{N_w} \end{aligned}$$

As least-squares formulation, 'good probability of any plan 54 *w* $\{\hat{g}_w\}$| is what is empirically observed, and $\Pi_{k \in w}(1-q_k)$ is expected observation. The estimation of qk's can be formulated in estimation component 44 as least-squares fit to determine $\{\hat{g}_w\}$|to minimize following total discrepancy:

$$\mathcal{E} = \sum_{\text{distinct } w} ||\prod_{k\in w}(1-q_k) - \hat{g}_w||^2,$$

with:

$$\frac{\partial \mathcal{E}}{\partial q_k} = -\sum_{\text{distinct } w}\left[2\left(\prod_{k\in w}(1-q_k)-\hat{g}_w\right)\prod_{j\in w, j\neq k}(1-q_j)\right],$$

The estimation component 44 may further implement weighted least-squares formulation that treats all plans 54 same way, although plans 54 do not get same count of trials. For example, plan 54 that is executed 100 times gives more dependable success rate than another plan 54 which is only executed few times. However, least-squares formulation neglects variable degree of confidence, and weighted least-squares formulation can be implemented in estimation component 44 to focus more on plans 54 with large number of trials (executions). The cost to minimize is:

$$\mathcal{E} = \sum_{\text{distinct } w} N_w||\prod_{k\in w}(1-q_k) - \hat{g}_w||^2.$$

where *Nw* is total number of trials that plan w is executed, i.e., *Nw* = *cgw* + *cbw.* In this case, gradient is:

$$\frac{\partial \mathcal{E}}{\partial q_k} = -\sum_{\text{distinct } w}\left[2N_w\left(\prod_{k\in w}(1-q_k)-\hat{g}_w\right)\prod_{j\in w, j\neq k}(1-q_j)\right].$$

The estimation component 44 in other embodiments implements coordinate descent algorithm to determine an optimal $\{\hat{g}_w\}$|. Fixing all-but-one q-values, and vary only one *qk,* an optimal *qk* value can be obtained viclosed form by setting $\frac{\partial\mathcal{E}}{\partial q_k}$| to 0, to yield:

$$\sum_{\text{distinct } w}\left[N_w\left(\prod_{k\in w}(1-q_k)-\hat{g}_w\right)\prod_{j\in w, j\neq k}(1-q_j)\right] = 0.$$

For $\alpha_{k,\omega}=\Pi_{j\in\omega, j\neq k}(1-q_j)$|, above equation is re-written as:

$$\sum_{\text{distinct } w}\left[N_w\left(\alpha_{k,w}(1-q_k)-\hat{g}_w\right)\cdot\alpha_{k,w}\right] = 0,$$

and thus:

$$(1-q_k) = \frac{\sum_w N_w \hat{g}_w \alpha_{k,w}}{\sum_w N_w \alpha_{k,w}^2}.$$

Because $\hat{g}_{\omega}|$ is approximately Gaussian with mean $v = g_{\omega}|$ and variance $\sigma^2 = \frac{g_w(1-g_w)}{N_w}$, following can be evaluated:

$$\ln p(\hat{g}_w) = \frac{||\hat{g}_w - \mu||^2}{2\sigma^2} = \frac{N_w||\hat{g}_w - g_w||^2}{2g_w(1-g_w)}.$$

Compared to cost function in weighted least-squares formulation above, linear term *Nw* is similar to quadratic discrepancy term, and denominator is missing. This assumes *gw*(1-*gw*) is more or less same for all w, which provides simpler implementation.

The estimation component 44 is operative to determine intermittency parameters of module failure, denoted for simplicity as *q*, for multiple intermittent faults as in single-fault case. In one embodiment, q is single scalar (assuming that all modules have same intermittency parameter) or alternatively can be computed as vector (allowing modules to have different intermittency). The component 44 operates to estimate value of q so as to best match observations 56 (*O*), where q is treated as deterministic unknown parameter, and estimation is formulated as maximum-likelihood estimation problem:

$$\hat{q}_{ML} = arg \max_q p_q(O).$$

where *O* is observation history, i.e, plans 54 and their corresponding observations 56. The term *pq*(*O*) is evaluated as:

$$p_q(O) = \sum_D p_q(O|D)p(D)\Big|$$

where *p(D)* is prior probability, initially all equal for all hypotheses. The observation likelihood *pq*(*O*|*D*) is *p*(*O*|*D,U*) above; plan 54 *U* is known, and this *U* is removed to simplify notation. Thus, given any intermittency parameter q, estimation component 44 evaluates observation likelihood *pq*(*O*) by above formulation, and obtains an optimal estimate by search over space for maximal *pq*(*O*). In one illustrative example, assuming all faulty modules have same intermittency parameter, given any plan 54, probability of observing success or failure is:

$$p_q(O|D,U) = \begin{cases} 1-(1-q)^{m(D,U)} & \text{if Fail} \\ (1-q)^{m(D,U)} & \text{if Success} \end{cases}\Bigg|$$

where exponent $m(D,U) \hat{=} |bad(D) \cap U|\Big|$ denotes number of bad modules m in hypothesis *D*(diagnosis) involved in plan 54 *U.* For any given *D* and *U, n*(*D;U*) is evaluated, by which *pq*(*O*) can be expressed as polynomial function of *q.* The estimation component 44 then searches for an optimal $q \in [0,1]$. Results were simulated for an exemplary simple system having five modules, two of which having faults with an intermittency rate of 0.2, as shown in graph 700 of Fig. 22. The curves 702, 704, and 706 show computed observation likelihood *pq*(*O*) as function of q with maximum likelihood estimate marked with circle for intermittency estimation based on 100, 200, and 500 trials, respectively. The graph 700 illustrates that with more trials, estimated *q* is closer to underlying true value. For example, with 500 trials, $\hat{q}_{ML} = 0.19$ (actual value is 0.2).

The resources of given plant 20 may be capable of operating at different performance levels, and in different modes, whereby above described failure probability estimation techniques can be extended to differentiate between faulty actions/capabilities/modes (hereinafter capabilities) and functioning capabilities within given module resource. It is possible to design machine configurations where failure in output capability of one module cannot be distinguished from failure in input capability of connected module, and this can be accommodated by collapsing indistinguishable faults.

## Claims

1. A computer-implemented method of controlling operation of a production system and estimating failure probabilities of resources in the production system including a producer component that receives production jobs from a customer and a plant having a plurality of resources, the method comprising:

   executing plans in the production system, wherein the resources are actuated or operated according to one or more of the plans so as to produce one or more products; maintaining a set of four count values for each of the plurality of resources in the production system, the four count values for each individual resource m including:

   a first count value $m_{11}$ indicating a number of the plans executed in the production system where the resource m was used and the plans failed,
   a second count value $m_{10}$ indicating a number of the plans executed in the production system where the resource m was used and the plans succeeded,
   a third count value $m_{01}$ indicating a number of the plans executed in the production system where the resource m was not used and the plans failed, and
   a fourth count value $m_{00}$ indicating a number of the plans executed in the production system where the resource m was not used and the plans succeeded;

   for each plan executed in the production system, incrementing a selected one of the count values for each of the resources based on a list of resources used in the plan and the success or failure of the plan;
   for each resource, estimating a current fault probability value for single or multiple, persistent or intermittent faults based on at least one of the corresponding set of count values;
   storing the current fault probability values of the resources;
   receiving production jobs from a customer;
   constructing the plans according to the production jobs based on the stored current fault probability values of the resources;
   executing the constructed plans to produce the products according to the production jobs.

2. The computer-implemented method of claim 1, wherein for each resource, estimating the current fault probability value for a single persistent fault includes:

   exonerating the resource by setting the current fault probability to zero if the second or third count values $m_{10}$ or $m_{01}$ are greater than zero; and
   otherwise, setting the current fault probability to 1/X, where X is the number of resources where both the second and third count values $m_{10}$ and $m_{01}$ are zero.

3. The computer-implemented method of claim 1, wherein for each resource, estimating the current fault probability value for a single intermittent fault includes:

   exonerating the resource by setting the current fault probability to zero if the third count value $m_{01}$ is greater than zero; and
   otherwise, setting the current fault probability according to the equation $\alpha w p_0(M)$;
   where $\alpha$ is a value selected so that the posterior fault probabilities for all the resources sum to 1;
   where w is determined according to the following equation:

$$w = [\frac{m_{10}}{m_{11} + m_{10}}]^{m_{10}} [\frac{m_{11}}{m_{11} + m_{10}}]^{m_{11}};$$

   and
   where $p_0(M)$ is the previous fault probability value.

4. The computer-implemented method of claim 1, for multiple persistent faults, further comprising:

   establishing a plurality of unique diagnoses d to be evaluated, at least one of the diagnoses including a single one of the resources m, and at least one of the diagnoses including at least two of the resources m, each diagnosis having a unique assignment of either successful or faulted to each member resource;

maintaining a set of four diagnosis count values for each diagnosis, the four diagnosis count values for each individual diagnosis including:

a first diagnosis count value $d_{11}$ indicating a number of failed plans where a faulted resource of the diagnosis d was used,
a second diagnosis count value $d_{10}$ indicating a number of successful plans where a faulted resource of the diagnosis d was used,
a third diagnosis count value $d_{01}$ indicating a number of failed plans where a successful resource of the diagnosis d was not used, and
a fourth diagnosis count value $d_{00}$ indicating a number of successful plans where a successful resource of the diagnosis d was not used;

exonerating the resources of a diagnosis by setting the current fault probability for that diagnosis to zero if the second or third diagnosis count values $d_{10}$ or $d_{01}$ are greater than zero;
otherwise, setting a current diagnosis fault probability to 1/X, where X is the number of diagnoses where both the second and third diagnosis count values $d_{10}$ and $d_{01}$ are zero; and
setting the current fault probability for the evaluated resources according to the following equation:

$$p(m|o_1, \ldots, o_t) = \sum_{d\ s.t. m \in d} p(d|o_1, \ldots, o_t).$$
,

where m is the resource, $o_1$,... $o_t$ is a set of observations and d ranges over the remaining set of suspect candidates S (for which the third count value $d_{01}$ is zero).

**5.** The computer-implemented method of claim 1, wherein for each resource, estimating the current fault probability value for multiple persistent faults includes:

establishing a plurality of unique diagnoses d to be evaluated, at least one of the diagnoses including a single one of the resources m, and at least one of the diagnoses including at least two of the resources m, each diagnosis having a unique assignment of either successful or faulted to each member resource;
maintaining a set of four diagnosis count values for each diagnosis, the four diagnosis count values for each individual diagnosis including:

a first diagnosis count value $d_{11}$ indicating a number of failed plans where a faulted resource of the diagnosis d was used,
a second diagnosis count value $d_{10}$ indicating a number of successful plans where a faulted resource of the diagnosis d was used,
a third diagnosis count value $d_{01}$ indicating a number of failed plans where a successful resource of the diagnosis d was not used, and
a fourth diagnosis count value $d_{00}$ indicating a number of successful plans where a successful resource of the diagnosis d was not used;

maintaining a list S of remaining suspect candidate diagnoses for which the third diagnosis count value $d_{01}$ is zero; and
setting a posterior fault probability for the evaluated resources according to the following equation:

$$p(m|o_1, \ldots, o_t) = \sum_{d\ s.t. m \in d} p(d|o_1, \ldots, o_t).$$

where m is the resource, $o_1$,...$o_t$ is a set of observations, and d ranges over the remaining set of suspect candidates S (for which the third count value $d_{01}$ is zero

**6.** The computer-implemented method of claim 1, wherein for each resource, estimating the current fault probability value for multiple intermittent faults includes:

maintaining a counter value $i_{11}$ associated with each set of modules m utilized in a failing plan i;

computing a failure term for the evaluated resources using the counter value $i_{11}$ according to the following equation:

$$\prod_{U} \text{fails}[1 - \prod_{m \in bad(D) \cap U}(1 - p_b(m))] = \prod_{i \in I}[1 - \prod_{m \in bad(D) \cap i}(1 - p_b(m))]^{i_{11}},$$

where I is a set of all such sets which have failed at least once, where m is the resource, and where $p_b(m)$ is the probability that a resource m produces an incorrect output when faulted;
computing a success term for the evaluated resources using the counter $m_{10}$ for each resource according to the following equation:

$$\prod_{U \text{ succeeds}} \prod_{m \in bad(d) \cap U} (1 - p_b(m)) = (1 - p_b(m))^{m_{10}}.;$$

and
setting a posterior fault probability for the evaluated resources according to the following equation:

$$p_t(D|O, \mathrm{U}) = \begin{cases} \prod_{U} \text{fails}[1 - \prod_{m \in bad(D) \cap U}(1 - p_b(m))] \\ \prod_{U} \text{succeeds} \prod_{m \in bad(D) \cap U}(1 - p_b(m)) \end{cases},$$

where $O=\{o_1,...o_t\}$ is a set of observations and U is an indication of whether the module was used in the plan associated with the observation o.

## Patentansprüche

1. Ein computerimplementiertes Verfahren des Steuerns des Betriebs eines Produktionssystems und Schätzens von Fehlerwahrscheinlichkeiten von Ressourcen in dem Produktionssystem, das eine Produktionskomponente, die Produktionsjobs von einem Kunden erhält, und eine Anlage mit mehreren Ressourcen enthält, wobei das Verfahren umfasst:

Ausführen von Plänen in dem Produktionssystem, in dem die Ressourcen gemäß einem oder mehreren der Pläne zum Herstellen von einem oder mehreren Produkten betätigt oder betrieben werden;
Führen eines Satzes von vier Zählwerten für jede der mehreren Ressourcen in dem Produktionssystem, wobei die vier Zählwerte für jede individuelle Ressource m enthalten:

einen ersten Zählwert $m_{11}$, der eine Anzahl der Pläne anzeigt, die in dem Produktionssystem ausgeführt wurden, in denen die Ressource m nicht genutzt wurde und die Pläne fehlschlugen,
einen zweiten Zählwert $m_{10}$, der eine Anzahl der Pläne anzeigt, die in dem Produktionssystem ausgeführt wurden, in denen die Ressource m genutzt wurde und die Pläne erfolgreich waren,
einen dritten Zählwert $m_{01}$, der eine Anzahl der Pläne anzeigt, die in dem Produktionssystem ausgeführt wurden, in denen die Ressource m genutzt wurde und die Pläne fehlschlugen, und
einen vierten Zählwert $m_{00}$, der eine Anzahl der Pläne anzeigt, die in dem Produktionssystem ausgeführt wurden, in denen die Ressource m nicht genutzt wurde und die Pläne erfolgreich waren;

Inkrementieren eines ausgewählten der Zählwerte für jede Ressource für jeden Plan, der in dem Produktionssystem ausgeführt wird, auf der Grundlage einer Liste von Ressourcen, die in dem Plan verwendet werden, und dem Erfolg oder Fehlschlag des Plans;
Schätzen eines aktuellen Fehlerwahrscheinlichkeitswerts für einzelne oder mehrfache, permanente oder sporadische Fehler für jede Ressource auf der Grundlage von zumindest einem Zählwert des entsprechenden Satzes der Zählwerte;
Speichern der aktuellen Fehlerwahrscheinlichkeitswerte der Ressourcen;
Empfangen von Produktionsjobs von einem Kunden;

Konstruieren der Pläne gemäß den Produktionsjobs auf der Grundlage der gespeicherten aktuellen Fehlerwahrscheinlichkeitswerte der Ressourcen;
Ausführen der konstruierten Pläne, um die Produkte gemäß den Produktionsjobs herzustellen.

**2.** Das computerimplementiertes Verfahren von Anspruch 1, in dem das Schätzen des aktuellen Fehlerwahrscheinlichkeitswerts für jede Ressource für einen einzelnen permanenten Fehler einschließt:

Freisprechen der Ressource durch Setzen des aktuellen Fehlerwahrscheinlichkeitswerts auf Null, wenn der zweite oder dritte Zählwert $m_{10}$ oder $m_{01}$ größer als Null ist; und
ansonsten Setzen der aktuellen Fehlerwahrscheinlichkeit auf 1/X, wobei X die Anzahl der Ressourcen ist, für die sowohl der zweite als auch dritte Zählwert $m_{10}$ und $m_{01}$ Null ist.

**3.** Das computerimplementiertes Verfahren von Anspruch 1, in dem das Schätzen des aktuellen Fehlerwahrscheinlichkeitswerts für jede Ressource für einen einzelnen sporadischen Fehler einschließt:

Freisprechen der Ressource durch Setzen des aktuellen Fehlerwahrscheinlichkeitswerts auf Null, wenn der dritte Zählwert $m_{01}$ größer als Null ist; und
ansonsten Setzen der aktuellen Fehlerwahrscheinlichkeit der Gleichung $\alpha$ w $p_0(M)$;
wobei $\alpha$ ein Wert ist, der so gewählt wird, dass sich die posterioren Fehlerwahrscheinlichkeiten für sämtliche Ressourcen zu 1 addieren;
wobei w gemäß der folgen Gleichung bestimmt wird:

$$w = [\frac{m_{10}}{m_{11}+m_{10}}]^{m_{10}}[\frac{m_{11}}{m_{11}+m_{10}}]^{m_{11}}.\;;$$

und
wobei $p_0(M)$ der vorherige Fehlerwahrscheinlichkeitswert ist.

**4.** Das computerimplementiertes Verfahren von Anspruch 1, das für mehrfache permanente Fehler weiterhin umfasst:

Erstellen mehrerer eindeutiger Diagnosen d, die auszuwerten sind, wobei zumindest eine der Diagnosen eine einzelne der Ressourcen m enthält und zumindest eine der Diagnosen zumindest zwei der Ressourcen m enthält, wobei jede Diagnose eine eindeutige Zuweisung von entweder erfolgreich oder fehlerhaft zu jeder teilnehmenden Ressource enthält;
Führen eines Satzes von vier Diagnosezählwerten für jede Diagnose, wobei die vier Diagnosezählwerte für jede individuelle Diagnose enthalten:

einen ersten Diagnosezählwert $d_{11}$, der eine Anzahl fehlgeschlagener Pläne anzeigt, in denen eine fehlerhafte Ressource der Diagnose d genutzt wurde,
einen zweiten Diagnosezählwert $d_{10}$, der eine Anzahl erfolgreicher Pläne anzeigt, in denen eine fehlerhafte Ressource der Diagnose d genutzt wurde,
einen dritten Diagnosezählwert $d_{01}$, der eine Anzahl fehlgeschlagener Pläne anzeigt, in denen eine erfolgreiche Ressource der Diagnose d nicht genutzt wurde, und
einen vierten Diagnosezählwert $d_{00}$, der eine Anzahl erfolgreicher Pläne anzeigt, in denen eine erfolgreiche Ressource der Diagnose d nicht genutzt wurde;

Freisprechen der Ressourcen einer Diagnose durch Setzen der aktuellen Fehlerwahrscheinlichkeit für diese Diagnose auf Null, wenn der zweite oder dritte Diagnosezählwert $d_{10}$ oder $d_{01}$ größer als Null ist;
ansonsten Setzen einer aktuellen Diagnosefehlerwahrscheinlichkeit auf 1/X, wobei X die Anzahl der Diagnosen ist, für die sowohl der zweite als auch dritte Diagnosezählwert $d_{10}$ und $d_{01}$ Null ist; und
Setzen der aktuellen Fehlerwahrscheinlichkeit für die ausgewerteten Ressourcen gemäß der folgenden Gleichung:

$$p(m|o_1,\ldots,o_t) = \sum_{d\ s.t. m\in d} p(d|o_1,\ldots,o_t).$$

wobei m die Ressource ist, $o_1,...o_t$ ein Satz von Beobachtungen ist und d sich über den verbleibenden Satz von verdächtigen Kandidaten S (für die der dritte Zählwert $d_{01}$ Null ist) erstreckt.

**5.** Das computerimplementiertes Verfahren von Anspruch 1, in dem für jede Ressource das Schätzen des aktuellen Fehlerwahrscheinlichkeitswerts für mehrfache permanente Fehler einschließt:

Erstellen mehrerer eindeutiger Diagnosen d, die auszuwerten sind, wobei zumindest eine der Diagnosen eine einzelne der Ressourcen m enthält und zumindest eine der Diagnosen zumindest zwei der Ressourcen m enthält, wobei jede Diagnose eine eindeutige Zuweisung von entweder erfolgreich oder fehlerhaft zu jeder teilnehmenden Ressource enthält;
Führen eines Satzes von vier Diagnosezählwerten für jede Diagnose, wobei die vier Diagnosezählwerte für jede individuelle Diagnose enthalten:

einen ersten Diagnosezählwert $d_{11}$, der eine Anzahl fehlgeschlagener Pläne anzeigt, in denen eine fehlerhafte Ressource der Diagnose d genutzt wurde,
einen zweiten Diagnosezählwert $d_{10}$, der eine Anzahl erfolgreicher Pläne anzeigt, in denen eine fehlerhafte Ressource der Diagnose d genutzt wurde,
einen dritten Diagnosezählwert $d_{01}$, der eine Anzahl fehlgeschlagener Pläne anzeigt, in denen eine erfolgreiche Ressource der Diagnose d nicht genutzt wurde, und
einen vierten Diagnosezählwert $d_{00}$, der eine Anzahl erfolgreicher Pläne anzeigt, in denen eine erfolgreiche Ressource der Diagnose d nicht genutzt wurde;

Führen einer Liste S von verbleibenden verdächtigen Kandidatendiagnosen, für die der dritte Diagnosezählwert $d_{01}$ Null ist; und
Setzen einer posterioren Fehlerwahrscheinlichkeit für die ausgewerteten Ressourcen gemäß der folgenden Gleichung:

$$p(m|o_1,\ldots,o_t) = \sum_{d\ s.t. m\in d} p(d|o_1,\ldots,o_t).$$

wobei m die Ressource ist, $o_1,...o_t$ ein Satz von Beobachtungen ist und d sich über den verbleibenden Satz von verdächtigen Kandidaten S (für die der dritte Zählwert $d_{01}$ Null ist) erstreckt.

**6.** Das computerimplementiertes Verfahren von Anspruch 1, in dem für jede Ressource das Schätzen des aktuellen Fehlerwahrscheinlichkeitswerts für mehrfache sporadische Fehler einschließt:

Führen eines Zählwerts $i_{11}$, der mit jedem Satz von Modulen m assoziiert ist, die in einem fehlerhaften Plan i verwendet werden;
Berechnen eines Fehlerausdrucks für die bewerteten Ressourcen unter Verwendung des Zählwerts $i_{11}$ gemäß der folgenden Gleichung:

$$\prod_{U \text{ fails}}[1-\prod_{m\in bad(D)\cap U}(1-p_b(m))] = \prod_{i\in I}[1-\prod_{m\in bad(D)\cap i}(1-p_b(m))]^{i_{11}}$$

wobei I ein Satz sämtlicher solcher Sätze ist, die zumindest einmal fehlerhaft waren, wobei m die Ressource ist, und wobei $p_0(m)$ die Wahrscheinlichkeit dafür ist, dass eine Ressource m eine fehlerhafte Ausgabe produziert, wenn sie fehlerhaft ist;
Berechnen eines Erfolgsausdrucks für die bewerteten Ressourcen unter Verwendung des Zählwerts $m_{10}$ für jede Ressource gemäß der folgenden Gleichung:

$$\prod_{U \text{ succeeds}} \prod_{m\in bad(d)\cap U} (1-p_b(m)) = (1-p_b(m))^{m_{10}}.$$

;

und
Setzen einer posterioren Fehlerwahrscheinlichkeit für die bewerteten Ressourcen gemäß der folgenden Glei-

chung:

$$p_t(D|O,\mathbf{U}) = \begin{cases} \prod_{U \text{ fails}}[1 - \prod_{m \in bad(D) \cap U}(1 - p_b(m))] \\ \prod_{U \text{ succeeds}} \prod_{m \in bad(D) \cap U}(1 - p_b(m)) \end{cases},$$

wobei $O=\{o_1, .., o_t\}$ ein Satz von Beobachtungen ist und U ein Hinweis darauf ist, ob das Modul in dem Plan verwendet wurde, der mit der Beobachtung o assoziiert ist.

## Revendications

1. Procédé mis en oeuvre par ordinateur pour commander un fonctionnement d'un système de production et estimer des probabilités de défaillance de ressources dans le système de production incluant une composante producteur qui reçoit des tâches de production d'un client et une usine ayant une pluralité de ressources, le procédé comprenant :

   l'exécution de plans dans le système de production, dans lequel les ressources sont actionnées ou utilisées conformément à un ou plusieurs des plans de manière à produire un ou plusieurs produit(s) ;
   le maintien d'un ensemble de quatre valeurs de compte pour chacune de la pluralité de ressources dans le système de production, les quatre valeurs de compte pour chaque ressource individuelle m incluant :

   une première valeur de compte $m_{11}$ indiquant un nombre des plans exécutés dans le système de production où la ressource m était utilisée et les plans ont échoué,
   une deuxième valeur de compte $m_{10}$ indiquant un nombre des plans exécutés dans le système de production où la ressource m était utilisée et les plans ont été un succès,
   une troisième valeur de compte $m_{01}$ indiquant un nombre des plans exécutés dans le système de production où la ressource m n'était pas utilisée et les plans ont échoué, et
   une quatrième valeur de compte $m_{00}$ indiquant un nombre des plans exécutés dans le système de production où la ressource m n'était pas utilisée et les plans ont été un succès ;

   pour chaque plan exécuté dans le système de production, l'incrémentation d'une sélectionnée des valeurs de compte pour chacune des ressources sur la base d'une liste de ressources utilisées dans le plan et du succès ou de l'échec du plan ;
   pour chaque ressource, l'estimation d'une valeur courante de probabilité de défaillance pour des défaillances uniques ou multiples persistantes ou intermittentes sur la base d'au moins une de l'ensemble correspondant de valeurs de compte ;
   le stockage des valeurs courantes de probabilité de défaillance des ressources ;
   la réception de tâches de production d'un client ;
   la construction des plans en fonction des tâches de production sur la base des valeurs stockées de probabilité de défaillance des ressources ;
   l'exécution des plans construits pour produire les produits conformément aux tâches de production.

2. Procédé mis en oeuvre par ordinateur selon la revendication 1, dans lequel, pour chaque ressource, l'estimation de la valeur courante de probabilité de défaillance pour une défaillance unique persistante inclut :

   l'exonération de la ressource en établissant la probabilité courante de défaillance à zéro si la deuxième ou la troisième valeur de compte $m_{10}$ ou $m_{01}$ est supérieure à zéro ; et
   sinon, l'établissement de la probabilité courante de défaillance à 1/X, où X est le nombre de ressources où les deuxième et troisième valeurs de compte $m_{10}$ et $m_{01}$ sont toutes les deux zéro.

3. Procédé mis en oeuvre par ordinateur selon la revendication 1, dans lequel, pour chaque ressource, l'estimation de la valeur courante de probabilité de défaillance pour une défaillance unique intermittente inclut :

   l'exonération de la ressource en établissant la probabilité courante de défaillance à zéro si la troisième valeur de compte $m_{01}$ est supérieure à zéro ; et
   sinon, l'établissement de la probabilité courante de défaillance conformément à l'équation $\alpha w p_0(M)$ ;
   où $\alpha$ est une valeur sélectionnée de telle manière que les probabilités de défaillance postérieure pour toutes les ressources se montent à 1 ;
où w est déterminé conformément à l'équation suivante :

$$w = [\frac{m_{10}}{m_{11} + m_{10}}]^{m_{10}} [\frac{m_{11}}{m_{11} + m_{10}}]^{m_{11}} ;$$

et
où $p_0(M)$ est la valeur précédente de probabilité de défaillance.

**4.** Procédé mis en oeuvre par ordinateur selon la revendication 1, pour des défaillances multiples persistantes, comprenant en outre :

l'établissement d'une pluralité de diagnostics uniques d à évaluer, au moins un des diagnostics incluant une seule des ressources m, et au moins un des diagnostics incluant au moins deux des ressources m, chaque diagnostic ayant une affectation unique de réussi ou défaillant à chaque ressource membre ;
le maintien d'un ensemble de quatre valeurs de compte de diagnostic pour chaque diagnostic, les quatre valeurs de compte de diagnostic pour chaque diagnostic individuel incluant :

une première valeur de compte de diagnostic du indiquant un nombre de plans ayant échoué où une ressource défaillante du diagnostic d était utilisée,
une deuxième valeur de compte de diagnostic $d_{10}$ indiquant un nombre de plans ayant réussi où une ressource défaillante du diagnostic d était utilisée,
une troisième valeur de compte de diagnostic $d_{01}$ indiquant un nombre de plans ayant échoué où une ressource ayant réussi du diagnostic d n'était pas utilisée, et
une quatrième valeur de compte de diagnostic $d_{00}$ indiquant un nombre de plans ayant réussi où une ressource ayant réussi du diagnostic d n'était pas utilisée ;

l'exonération des ressources d'un diagnostic en établissant la probabilité courante de défaillance pour ce diagnostic à zéro si la deuxième ou la troisième valeur de compte de diagnostic $d_{10}$ ou $d_{01}$ est supérieure à zéro ;
sinon, l'établissement d'une probabilité courante de défaillance de diagnostic à 1/X, où X est le nombre de diagnostics où les deuxième et troisième valeurs de compte de diagnostic $d_{10}$ et $d_{01}$ sont zéro ; et
l'établissement de la probabilité courante de défaillance pour les ressources évaluées conformément à l'équation suivante :

$$p(m|o_1, \ldots, o_t) = \sum_{d\ s.t.\ m \in d} p(d|o_1, \ldots, o_t). ,$$

où m est la ressource, $o_1,...o_t$ est un ensemble d'observations et d est dans la plage de l'ensemble restant de candidats suspects S (pour lesquels la troisième valeur de compte $d_{01}$ est zéro).

**5.** Procédé mis en oeuvre par ordinateur selon la revendication 1, dans lequel, pour chaque ressource, l'estimation de la valeur courante de probabilité de défaillance pour des défaillances multiples persistantes inclut :

l'établissement d'une pluralité de diagnostics uniques d à évaluer, au moins un des diagnostics incluant une seule des ressources m, et au moins un des diagnostics incluant au moins deux des ressources m, chaque diagnostic ayant une affectation unique de réussi ou défaillant à chaque ressource membre ;
le maintien d'un ensemble de quatre valeurs de compte de diagnostic pour chaque diagnostic, les quatre valeurs de compte de diagnostic pour chaque diagnostic individuel incluant :

une première valeur de compte de diagnostic du indiquant un nombre de plans ayant échoué où une ressource défaillante du diagnostic d était utilisée,
une deuxième valeur de compte de diagnostic $d_{10}$ indiquant un nombre de plans ayant réussi où une ressource défaillante du diagnostic d était utilisée,
une troisième valeur de compte de diagnostic $d_{01}$ indiquant un nombre de plans ayant échoué où une ressource ayant réussi du diagnostic d n'était pas utilisée, et
une quatrième valeur de compte de diagnostic $d_{00}$ indiquant un nombre de plans ayant réussi où une ressource ayant réussi du diagnostic d n'était pas utilisée ;

le maintien d'une liste S de diagnostics candidats suspects restant pour lesquels la troisième valeur de compte de diagnostic $d_{01}$ est zéro ; et
l'établissement d'une probabilité de défaillance postérieure pour les ressources évaluées conformément à l'équation suivante :

$$p(m|o_1,\ldots,o_t) = \sum_{d\ s.t. m\in d} p(d|o_1,\ldots,o_t).$$
,

où m est la ressource, $o_1,\ldots o_t$ est un ensemble d'observations et d est dans la plage de l'ensemble restant de candidats suspects S (pour lesquels la troisième valeur de compte $d_{01}$ est zéro).

**6.** Procédé mis en oeuvre par ordinateur selon la revendication 1, dans lequel, pour chaque ressource, l'estimation de la valeur courante de probabilité de défaillance pour des défaillances multiples intermittentes inclut :

le maintien d'une valeur de compteur $i_{11}$ associée avec chaque ensemble de modules m utilisés dans un plan défaillant i ;
le calcul d'un terme de défaillance pour les ressources évaluées en utilisant la valeur de compteur $i_{11}$ conformément à l'équation suivante :

$$\prod\nolimits_{U\text{ fails}}[1-\prod\nolimits_{m\in bad(D)\cap U}(1-p_b(m))] = \prod\nolimits_{i\in I}[1-\prod\nolimits_{m\in bad(D)\cap i}(1-p_b(m))]^{i_{11}}$$
,

où 1 est un ensemble de tous les tels ensembles qui ont été défaillants au moins une fois, où m est la ressource, et où $p_b(m)$ est la probabilité qu'une ressource m produise une sortie incorrecte lorsqu'elle est défaillante ;
le calcul d'un terme de succès pour les ressources évaluées en utilisant le compteur $m_{10}$ pour chaque ressource conformément à l'équation suivante :

$$\prod_{U\text{ succeeds}}\ \prod_{m\in bad(d)\cap U}(1-p_b(m)) = (1-p_b(m))^{m_{10}}$$
;

et
l'établissement d'une probabilité de défaillance postérieure pour les ressources évaluées conformément à l'équation suivante :

$$p_t(D|O,\mathrm{U}) = \left\{ \begin{array}{l} \prod_{U\text{ fails}}[1-\prod_{m\in bad(D)\cap U}(1-p_b(m))] \\ \prod_{U\text{ succeeds}}\prod_{m\in bad(D)\cap U}(1-p_b(m)) \end{array} \right.$$
,

où $O=\{o_1,\ldots o_t\}$ est un ensemble d'observations et U est une indication de si le module était utilisé dans le plan associé avec l'observation o.

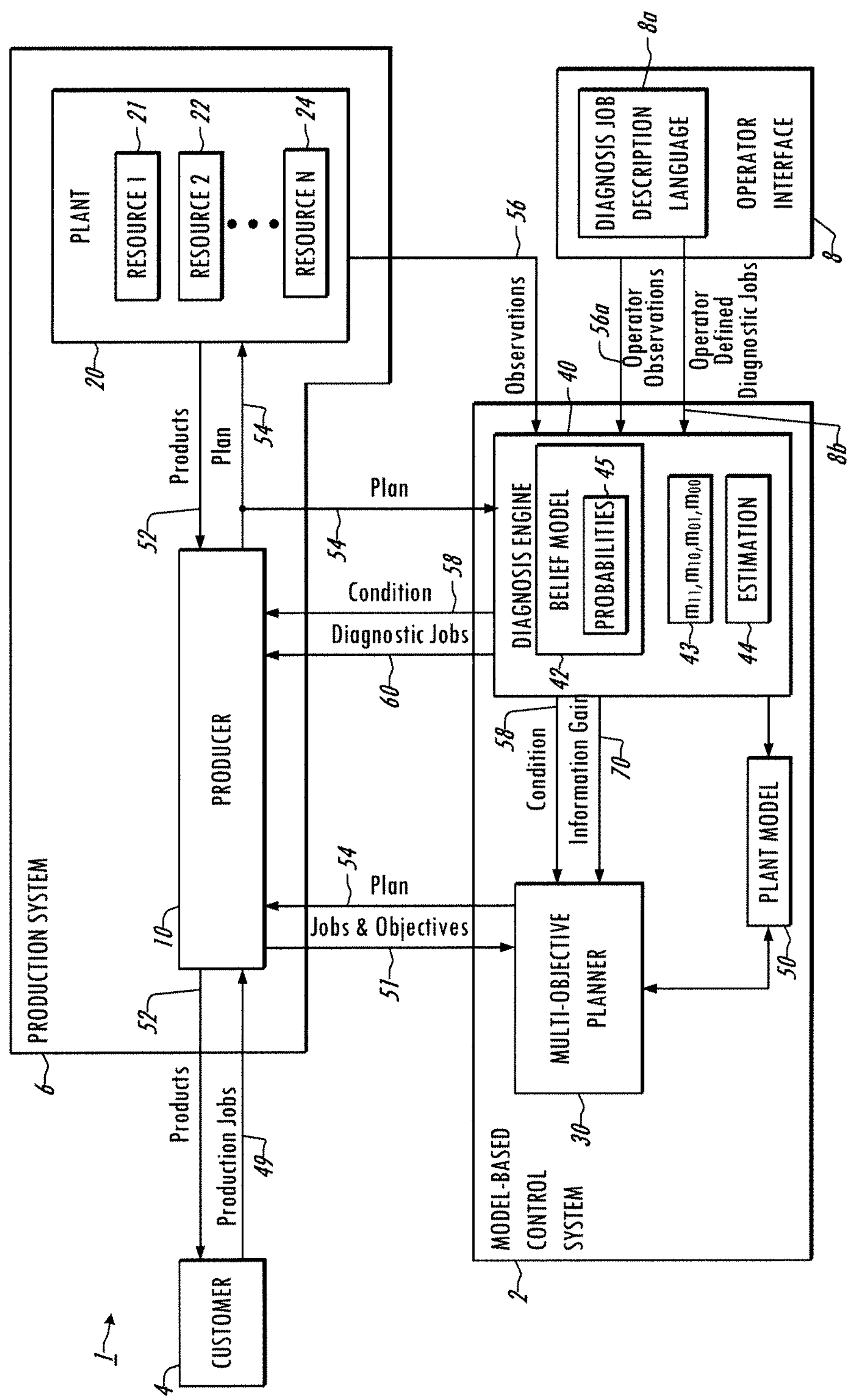
PRODUCTION SYSTEM
6
PLANT
20
RESOURCE 1
21
RESOURCE 2
22
RESOURCE N
24
Products
Plan
54
52
PRODUCER
10
Plan
54
Condition
58
Diagnostic Jobs
60
Plan
54
Jobs & Objectives
51
Products
Production Jobs
49
52
CUSTOMER
4
1
Observations
56
Operator Observations
56a
Operator Defined Diagnostic Jobs
DIAGNOSIS JOB DESCRIPTION LANGUAGE
8a
OPERATOR INTERFACE
8
8b
40
DIAGNOSIS ENGINE
BELIEF MODEL
PROBABILITIES
45
42
m11,m10,m01,m00
43
ESTIMATION
44
Condition
58
Information Gain
70
MULTI-OBJECTIVE PLANNER
30
PLANT MODEL
50
MODEL-BASED CONTROL SYSTEM
2

FIG. 1

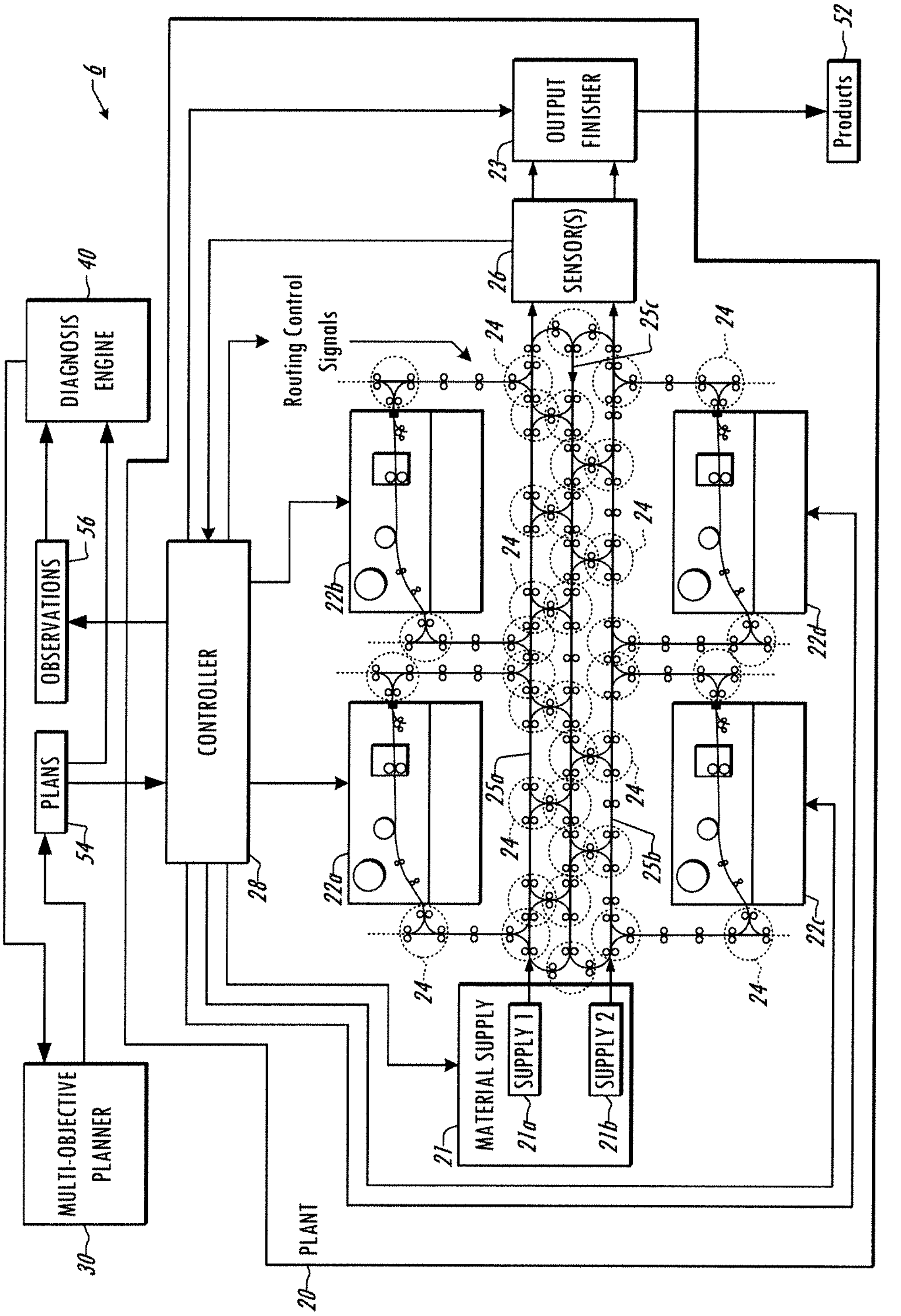
6
MULTI-OBJECTIVE PLANNER
30
DIAGNOSIS ENGINE
40
OBSERVATIONS
56
PLANS
54
CONTROLLER
28
Routing Control Signals
MATERIAL SUPPLY
SUPPLY 1
SUPPLY 2
21
21a
21b
22a
22b
22c
22d
24
25a
25b
25c
SENSOR(S)
26
OUTPUT FINISHER
23
Products
52
PLANT
20

FIG. 2

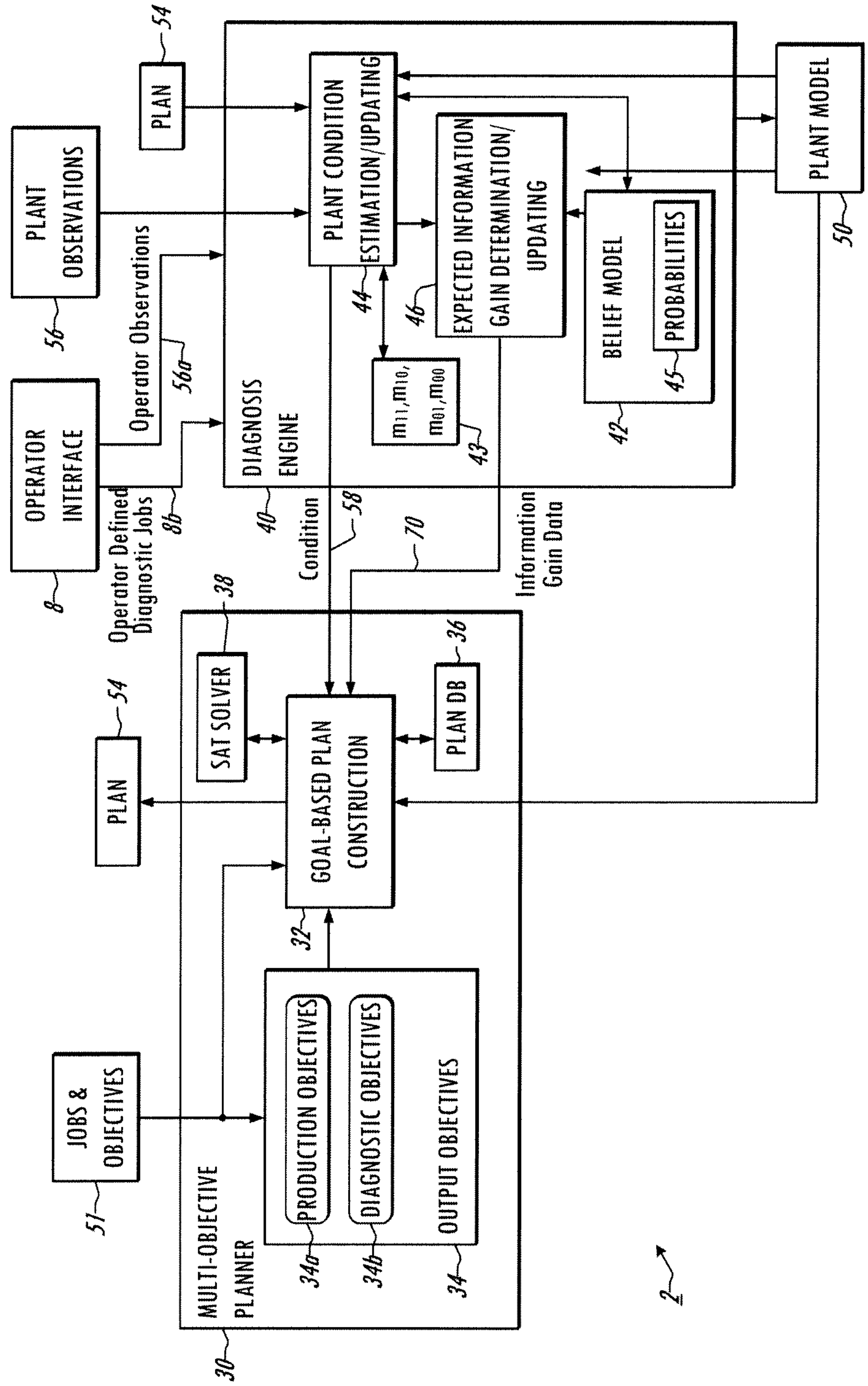
PLANT OBSERVATIONS
56
PLAN
54
OPERATOR INTERFACE
8
Operator Observations
56a
Operator Defined Diagnostic Jobs
8b
DIAGNOSIS ENGINE
40
PLANT CONDITION ESTIMATION/UPDATING
44
EXPECTED INFORMATION GAIN DETERMINATION/ UPDATING
46
m11, m10, m01, m00
43
BELIEF MODEL
42
PROBABILITIES
45
PLANT MODEL
50
Condition
58
70
Information Gain Data
PLAN
54
SAT SOLVER
38
GOAL-BASED PLAN CONSTRUCTION
32
PLAN DB
36
JOBS & OBJECTIVES
51
PRODUCTION OBJECTIVES
34a
DIAGNOSTIC OBJECTIVES
34b
OUTPUT OBJECTIVES
34
MULTI-OBJECTIVE PLANNER
30
2

FIG. 3

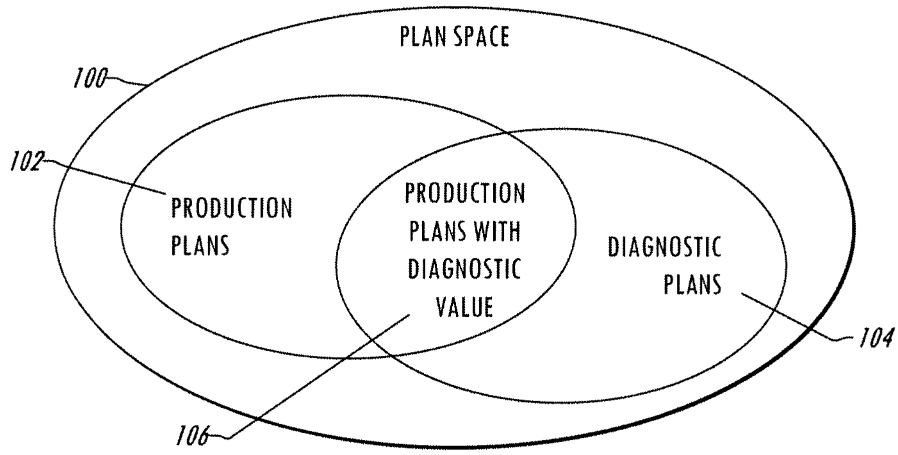
PLAN SPACE
100
102
PRODUCTION PLANS
PRODUCTION PLANS WITH DIAGNOSTIC VALUE
DIAGNOSTIC PLANS
104
106

FIG. 4

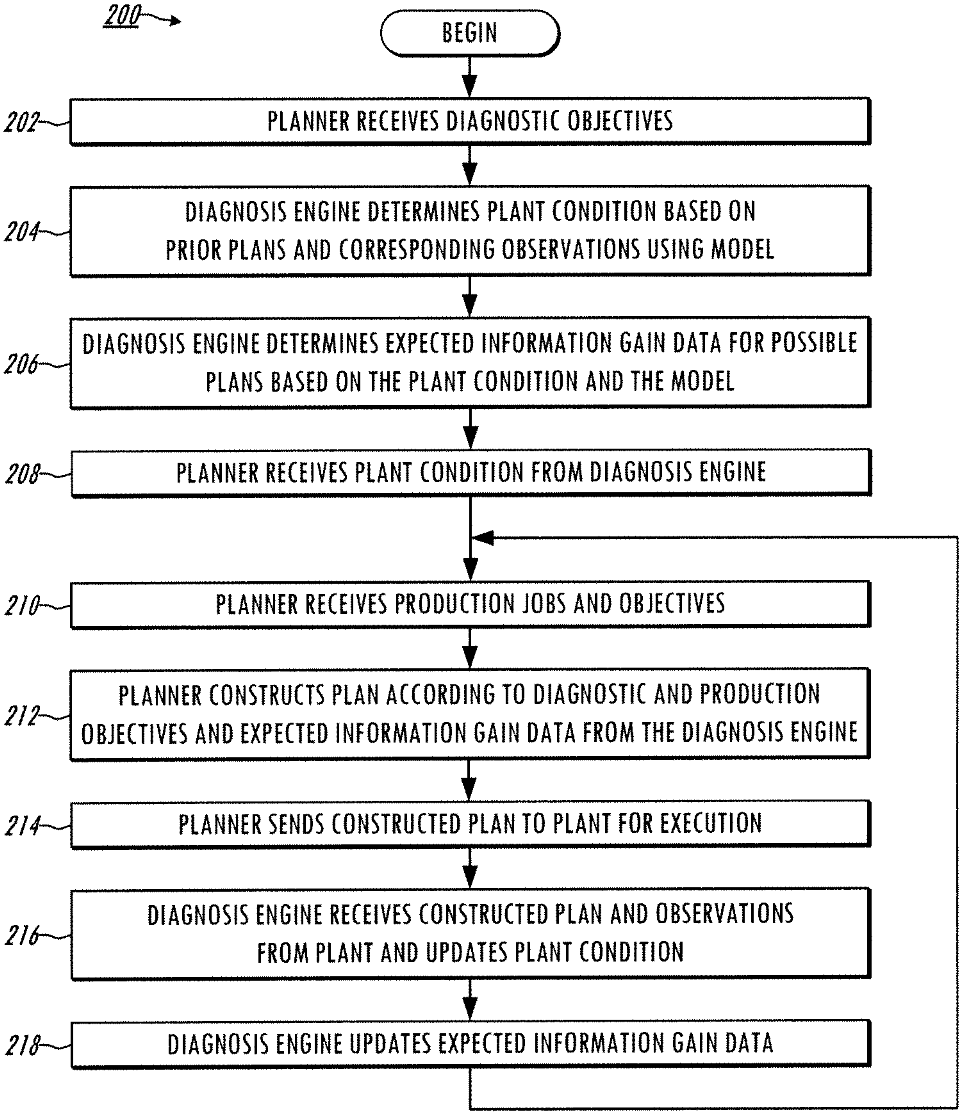
200
BEGIN
202
PLANNER RECEIVES DIAGNOSTIC OBJECTIVES
204
DIAGNOSIS ENGINE DETERMINES PLANT CONDITION BASED ON PRIOR PLANS AND CORRESPONDING OBSERVATIONS USING MODEL
206
DIAGNOSIS ENGINE DETERMINES EXPECTED INFORMATION GAIN DATA FOR POSSIBLE PLANS BASED ON THE PLANT CONDITION AND THE MODEL
208
PLANNER RECEIVES PLANT CONDITION FROM DIAGNOSIS ENGINE
210
PLANNER RECEIVES PRODUCTION JOBS AND OBJECTIVES
212
PLANNER CONSTRUCTS PLAN ACCORDING TO DIAGNOSTIC AND PRODUCTION OBJECTIVES AND EXPECTED INFORMATION GAIN DATA FROM THE DIAGNOSIS ENGINE
214
PLANNER SENDS CONSTRUCTED PLAN TO PLANT FOR EXECUTION
216
DIAGNOSIS ENGINE RECEIVES CONSTRUCTED PLAN AND OBSERVATIONS FROM PLANT AND UPDATES PLANT CONDITION
218
DIAGNOSIS ENGINE UPDATES EXPECTED INFORMATION GAIN DATA

FIG. 5

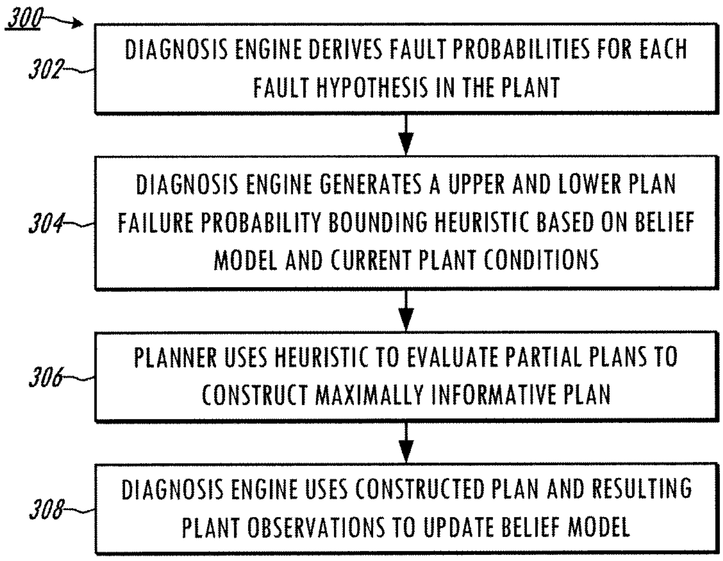
300
302
DIAGNOSIS ENGINE DERIVES FAULT PROBABILITIES FOR EACH FAULT HYPOTHESIS IN THE PLANT
304
DIAGNOSIS ENGINE GENERATES A UPPER AND LOWER PLAN FAILURE PROBABILITY BOUNDING HEURISTIC BASED ON BELIEF MODEL AND CURRENT PLANT CONDITIONS
306
PLANNER USES HEURISTIC TO EVALUATE PARTIAL PLANS TO CONSTRUCT MAXIMALLY INFORMATIVE PLAN
308
DIAGNOSIS ENGINE USES CONSTRUCTED PLAN AND RESULTING PLANT OBSERVATIONS TO UPDATE BELIEF MODEL

FIG. 6

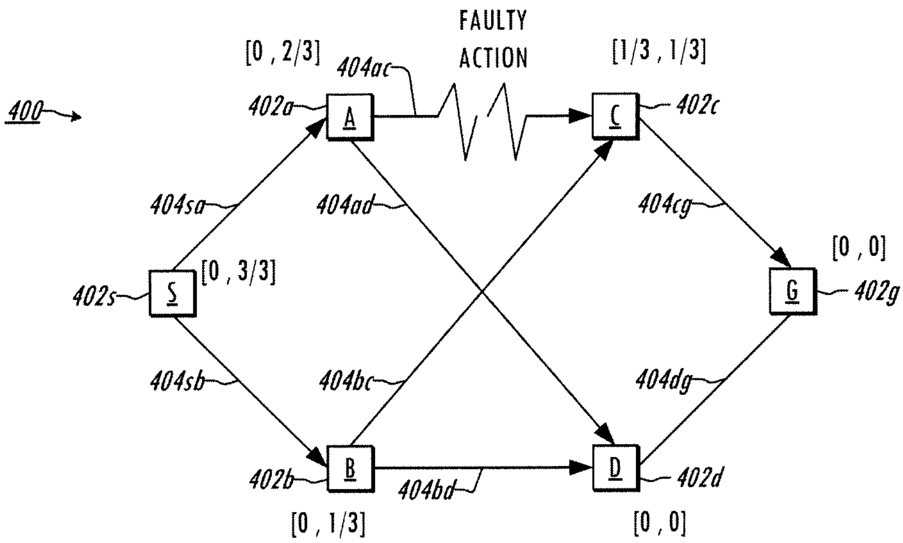
400
FAULTY ACTION
[0 , 2/3]
404ac
[1/3 , 1/3]
402a
A
C
402c
404sa
404ad
404cg
[0 , 0]
402s
S
[0 , 3/3]
G
402g
404sb
404bc
404dg
402b
B
404bd
D
402d
[0 , 1/3]
[0 , 0]

FIG. 7

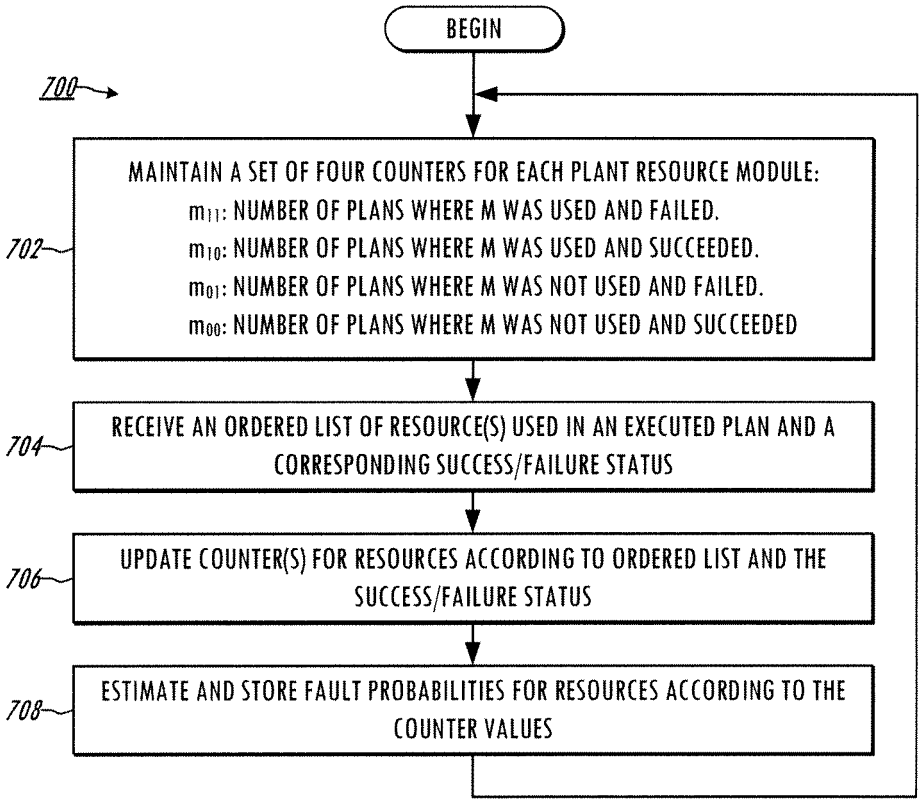


FIG. 8

500

| | |
|---|---|
| Single Persistent | Multiple Persistent |
| Single Intermittent | Multiple Intermittent |

FIG. 9

510

| | Fail | Success |
|---|---|---|
| Used | $m_{11}$ | $m_{10}$ |
| Not Used | $m_{01}$ | $m_{00}$ |

FIG. 10

520

| U \ O | Fail | Success |
|---|---|---|
| Used | 1 | 0 |
| Not Used | 0 | 1 |

$$P(O \mid M = m, U)$$

FIG. 11

530

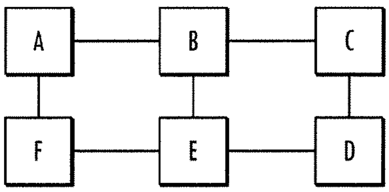


FIG. 12

540

| t | m = A | m = B | m = C | m = D | m = E | m = F |
|---|---|---|---|---|---|---|
| 0 | $10^{-10}$ | $10^{-10}$ | $10^{-10}$ | $10^{-10}$ | $10^{-10}$ | $10^{-10}$ |
| 1 | 1/6 | 1/6 | 1/6 | 1/6 | 1/6 | 1/6 |
| 2 | 0 | 0 | 0 | 1/3 | 1/3 | 1/3 |
| 3 | 0 | 0 | 0 | 1 | 0 | 0 |

FIG. 13

550

| U \ O | Fail | Success |
|---|---|---|
| Used | $\frac{m_{11}}{m_{11}+m_{10}}$ | $\frac{m_{10}}{m_{11}+m_{10}}$ |
| Not Used | 0 | 1 |

$$P(O \mid M = m, U)$$

FIG. 14

560

| t | m = A | m = B | m = C | m = D | m = E | m = F |
|---|---|---|---|---|---|---|
| 0 | $10^{-10}$ | $10^{-10}$ | $10^{-10}$ | $10^{-10}$ | $10^{-10}$ | $10^{-10}$ |
| 1 | 1/6 | 1/6 | 1/6 | 1/6 | 1/6 | 1/6 |
| 2 | 1/15 | 1/15 | 1/15 | 4/15 | 4/15 | 4/15 |
| 3 | 1/9 | 1/9 | 1/9 | 4/9 | 1/9 | 1/9 |
| 4 | 16/107 | 16/107 | 16/107 | 27/107 | 16/107 | 16/107 |
| 10 | .16 | .16 | .16 | .18 | .16 | .16 |

FIG. 15

570

| t | m = A | m = B | m = C | m = D | m = E | m = F |
|---|---|---|---|---|---|---|
| 2001 | 0 | .2 | .3 | .3 | .2 | 0 |
| 4002 | 0 | 0 | 0 | .7 | .3 | 0 |
| 6003 | 0 | 0 | 0 | .77 | .23 | 0 |
| 8004 | 0 | 0 | 0 | .83 | .17 | 0 |
| 16008 | 0 | 0 | 0 | .96 | .04 | 0 |

FIG. 16

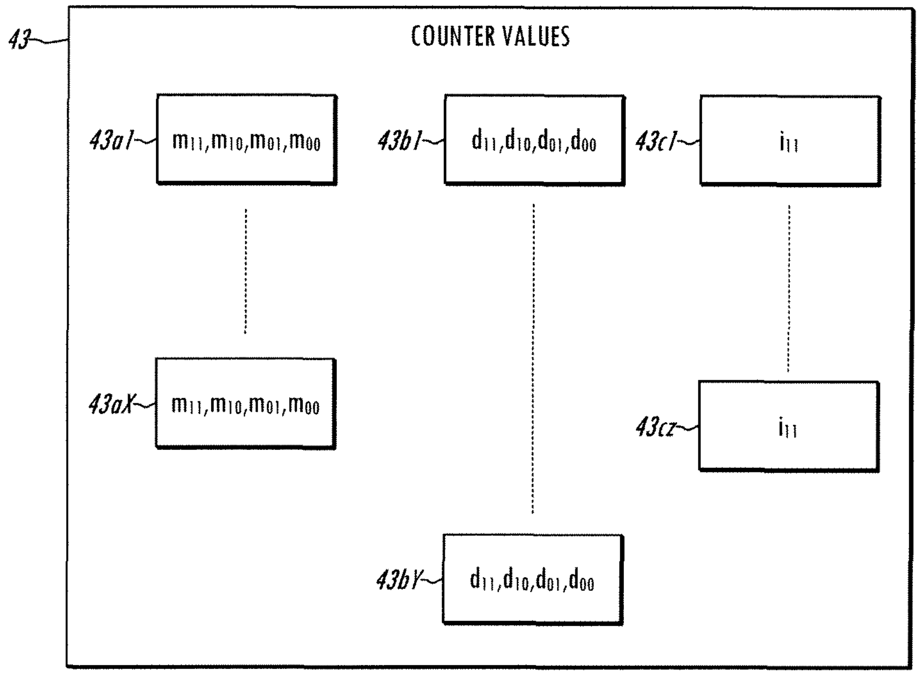


FIG. 17

580

| U \ O | Fail | Success |
|---|---|---|
| $bad(d) \cap U \neq \emptyset$ | 1 | 0 |
| $bad(d) \cap U = \emptyset$ | 0 | 1 |

FIG. 18

590

| n | $d_{11}$ | $d_{10}$ | candidates |
|---|---|---|---|
| 1 | 1 | 2 | D |
| 14 | 1 | 3 | A AB AC AD B BC BD C CD DE E EF F |
| 6 | 1 | 4 | AE AF BE BF CE CF |

FIG. 19

600

| n | p | candidates |
|---|---|---|
| 1 | 0.22 | D |
| 5 | .016 | A B C E F |
| 9 | $1.6 \times 10^{-10}$ | AB AC AD BC BD CD DE DF EF |
| 6 | $1.2 \times 10^{-10}$ | AE AF BE BF CE CF |

FIG. 20

$$P(O \mid D = d, U)$$

610

| U \ O | Fail | Success |
|---|---|---|
| $bad(d) \cap U \neq \emptyset$ | $\frac{d_{11}}{d_{11} + d_{10}}$ | $\frac{d_{10}}{d_{11} + d_{10}}$ |
| $bad(d) \cap U = \emptyset$ | 0 | 1 |

FIG. 21

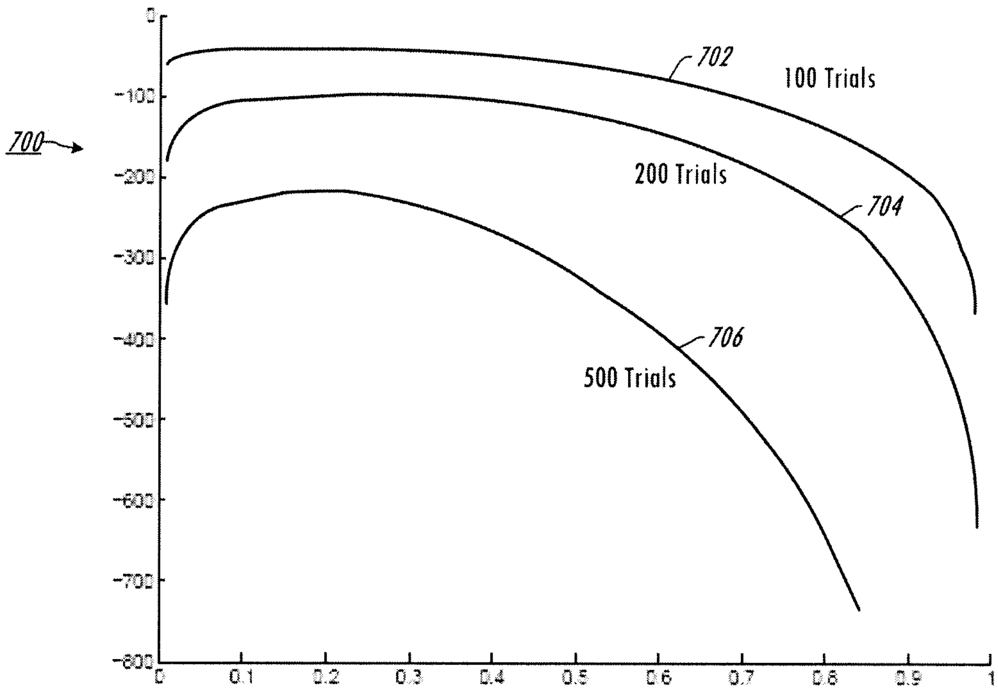


FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- An evaluation of similarity coefficients for software fault localization. **R. ABREU ; P. ZOETWEIJ ; A.J.C. VAN GEMUND.** 12th Pacific Rim International Symposium on Dependable Computing (PRDV'06). IEEE, 2006